(19) **Europäisches Patentamt**
**European Patent Office**
**Office européen des brevets**

(11) **EP 4 704 482 A1**

(12) **EUROPEAN PATENT APPLICATION**
published in accordance with Art. 153(4) EPC

(43) Date of publication:
04.03.2026 Bulletin 2026/10

(21) Application number: 23934565.5

(22) Date of filing: 27.04.2023

(51) International Patent Classification (IPC):
*H04W 72/23* [(2023.01)]

(52) Cooperative Patent Classification (CPC):
H04L 1/00; H04L 5/00; H04W 72/0446;
H04W 72/0453; H04W 72/23

(86) International application number:
PCT/CN2023/091395

(87) International publication number:
WO 2024/221372 (31.10.2024 Gazette 2024/44)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **WANG, Lei**
**Beijing 100085 (CN)**

(74) Representative: **Dehns Germany Partnerschaft mbB**
**Theresienstraße 6-8**
**80333 München (DE)**

(54) **RESOURCE DETERMINATION METHOD AND APPARATUS, AND COMMUNICATION DEVICE, COMMUNICATION SYSTEM AND MEDIUM**

(57) The present disclosure provides a resource determination method and apparatus, and a device and a storage medium. The method comprises: receiving first information and second information sent by a network device, wherein the first information is used for indicating a frequency domain range which cannot be used for downlink transmission and/or reception, and the second information is used for indicating a first resource allocated by the network device to a terminal; and on the basis of the first information and the second information, determining in a subband full duplex (SBFD) time unit a second resource used for downlink transmission and/or reception. Thus, during PDSCH transmission and/or reception, VRBs may be all mapped to PRBs used for downlink transmission and/or reception, thereby improving the resource utilization efficiency.

FIG. 3c

**Description**

<u>TECHNICAL FIELD</u>

The disclosure relates to the field of communication technology, in particular to a resource determination method and apparatus, a communication device, a communication system, and a storage medium.

<u>BACKGROUND</u>

In a communication system, a frequency domain range of a downlink (DL) or flexible (F) symbol may be divided into a plurality of subbands (SBs). The plurality of subbands may include one uplink (UL) subband and at least one DL subband. The network device may send a DL signal in the DL subband and receive a UL signal in the UL subband.

<u>SUMMARY</u>

The present disclosure provides a resource determination method and apparatus, a communication device, a communication system, and a storage medium.
In a first aspect, embodiments of the present disclosure provide a resource determination method. The method includes:

receiving first information and second information sent by a network device, in which the first information is used to indicate a frequency domain range unavailable for downlink transmission and/or reception, and the second information is used to indicate a first resource allocated by the network device to the terminal; and
determining a second resource for downlink transmission and/or reception in a subband full duplex (SBFD) time unit based on the first information and the second information.

In a second aspect, embodiments of the present disclosure provide a resource determination method. The method includes:

sending first information and second information to a terminal;
in which the first information is used to indicate a frequency domain range unavailable for downlink transmission and/or reception, the second information is used to indicate a first resource allocated by the network device to the terminal, and the first information and the second information are used to assist the terminal in determining a second resource for downlink transmission and/or reception in a SBFD time unit.

In a third aspect, embodiments of the present disclosure provide a resource determination apparatus. The apparatus is configured in a terminal UE and includes:

a receiving unit, configured to receive first information and second information sent by a network device, in which the first information is used to indicate a frequency domain range unavailable for downlink transmission and/or reception, and the second information is used to indicate a first resource allocated by the network device to the terminal; and
a determining unit is configured to determine a second resource for downlink transmission and/or reception in a SBFD time unit based on the first information and the second information.

In a fourth aspect, embodiments of the present disclosure provide a resource determination apparatus. The apparatus is configured in a network device and includes:

a sending unit, configured to send first information and second information to a terminal,
in which the first information is used to indicate a frequency domain range unavailable for downlink transmission and/or reception, the second information is used to indicate a first resource allocated by the network device to the terminal, and the first information and the second information are used to assist the terminal in determining a second resource for downlink transmission and/or reception in a SBFD time unit.

In a fifth aspect, embodiments of the present disclosure provide a communication device. The communication device includes:
one or more processors, in which the processor is configured to call instructions to enable the communication device to perform the resource determination method as described in any one of the first aspect and the second aspect.
In a sixth aspect, embodiments of the present disclosure provide a communication device. The communication device includes:

one or more processors, in which the processor is configured to call instructions to enable the communication device to perform the method as described in any one of the first aspect and the second aspect.

In a seventh aspect, embodiments of the present disclosure provide a storage medium having instructions stored thereon. When the instructions are performed on a communication device, the communication device is caused to perform the resource determination method as described in any one of the first aspect and the second aspect.

In an eighth aspect, embodiments of the present disclosure provide a communication system. The communication system includes a terminal UE and a network device. The terminal UE is configured to implement the method as described in the first aspect. The network device is configured to implement the method as described in the second aspect.

## BRIEF DESCRIPTION OF THE DRAWINGS

The above and/or additional aspects and advantages of the present disclosure will become apparent and readily understood from the following description of embodiments in combination with the accompanying drawings, in which:

FIG. 1 is a structural schematic diagram illustrating a communication system provided by an embodiment of the disclosure.

FIGs. 2a-2g are schematic diagrams illustrating an interaction of a resource determination method provided by an embodiment of the present disclosure.

FIGs. 3a-3e are flowcharts illustrating a resource determination method provided by an embodiment of the present disclosure.

FIGs. 4a-4c are flowcharts illustrating a resource determination method provided by an embodiment of the present disclosure.

FIG. 5 is a flowchart illustrating a resource determination method provided by an embodiment of the present disclosure.

FIG. 6a is a structural schematic diagram illustrating a first resource determination apparatus provided by an embodiment of the disclosure.

FIG. 6b is a structural schematic diagram illustrating a second resource determination apparatus provided by another embodiment of the disclosure.

FIG. 7a is a structural schematic diagram illustrating a communication device provided by an embodiment of the disclosure.

FIG. 76b is a structural schematic diagram illustrating a chip provided by another embodiment of the disclosure.

## DETAILED DESCRIPTION

A method in the present disclosure may be used to solve a problem of "resource mapping during downlink transmission and/or reception".

The present disclosure provides a resource determination method and apparatus, a communication device, a communication system, and a storage medium.

In a first aspect, embodiments of the present disclosure provide a resource determination method. The method includes:

receiving first information and second information sent by a network device, in which the first information is used to indicate a frequency domain range unavailable for downlink transmission and/or reception, and the second information is used to indicate a first resource allocated by the network device to the terminal; and

determining a second resource for downlink transmission and/or reception in a subband full duplex (SBFD) time unit based on the first information and the second information.

In the above embodiment, the terminal receives the first information and the second information sent by the network device, and determines the second resource for downlink transmission and/or reception in the SBFD time unit based on the first information and the second information, thus solving the problem of resource mapping during downlink transmission and/or reception, and improving a resource mapping efficiency and a communication efficiency.

In combination with some embodiments of the first aspect, in some embodiments, the first resource includes one or more resource block groups (RBGs), and the method further includes:

receiving third information sent by the network device, in which the third information is used to configure the RBGs; and

determining a numerical count of virtual resource blocks (VRBs) included in each RBG within a frequency domain range of a bandwidth part (BWP) and a frequency domain range of the each RBG according to bandwidth information of the BWP, a starting position of the BWP, and the third information.

In the above embodiment, the third information sent by the network device is received and the numerical count of VRBs included in each RBG within the frequency domain range of the BWP and the frequency domain range of each RBG are determined. Thus, the terminal may map all VRBs in the RBG to PRBs for downlink transmission and/or reception in a case where a resource allocation mode is type 0, solving the problem of the resource mapping during the downlink transmission and/or reception and preventing part of VRBs from being mapped to PRBs that cannot be used for the downlink transmission and/or reception.

In combination with some embodiments of the first aspect, in some embodiments, determining the second resource for downlink transmission and/or reception in the SBFD time unit based on the first information and the second information includes:

determining a VRB for downlink transmission and/or reception in the first resource indicated by the second information based on the first information and the numerical count of VRBs included in each RBG within the frequency domain range of the BWP and the frequency domain range of the each RBG; and
determining a physical resource block (PRB) to which the VRB is non-interleavedly mapped as the second resource.

In the above embodiment, with determining the PRB after non-interleaved mapping as the second resource, it may be achieved that all VRBs in the RBG may be mapped to PRBs used for the downlink transmission and/or reception in a case where a resource allocation mode is type 0, thus ensuring an accuracy of resource mapping under different resource allocation modes and ensuring that all resources after mapping may be used for the downlink transmission and/or reception.

In combination with some embodiments of the first aspect, in some embodiments, the first resource includes a plurality of consecutive VRBs, and determining the second resource for downlink transmission and/or reception in the SBFD time unit based on the first information and the second information includes:

determining, based on the first information, within a frequency domain range of a BWP, a VRB for downlink transmission and/or reception in the first resource indicated by the second information; and
determining a PRB to which the VRB for downlink transmission and/or reception in the first resource indicated by the second information is non-interleavedly mapped as the second resource.

In the above embodiment, with determining the PRB to which the VRB for downlink transmission and/or reception is non-interleavedly mapped as the second resource, it may be achieved that the terminal maps part of or all of the consecutive VRBs allocated by the network device to the PRB for the downlink transmission and/or reception in a case where the resource allocation mode is type 1 and a non-interleaved mapping mode is used, thus ensuring an accuracy of resource mapping under different resource allocation modes and different mapping modes, ensuring that all resources after mapping may be used for the downlink transmission and/or reception, and preventing part of VRBs from being mapped to a PRB that cannot be used for the downlink transmission and/or reception.

In combination with some embodiments of the first aspect, in some embodiments, the first resource includes a plurality of consecutive VRBs, and the method further includes:

receiving fourth information sent by the network device, in which the fourth information is used for interleaving configuration;
determining a numerical count of first VRBs included in each VRB bundle within a frequency domain range of a BWP and a first frequency domain range of the each VRB bundle according to bandwidth information of a BWP, a starting position of the BWP, and the fourth information; and
determining a numerical count of PRBs included in each PRB bundle within the frequency domain range of the BWP and a frequency domain range of the each PRB bundle according to the bandwidth information of the BWP, the starting position of the BWP and the fourth information, in which a bundle configuration of the PRB bundle is the same as a bundle configuration of the VRB bundle.

In the above embodiment, the fourth information is received to determine a numerical count of VRB bundles and a numerical count of PRB bundles within a range of the BWP, and the frequency domain ranges of the VRB bundles and the frequency domain ranges of the PRB bundles. Thus, resource mapping may be achieved by using the VRB bundles and the PRB bundles in a case where a resource allocation mode is type 1 and an interleaved mapping mode is used, thus reducing mapping complexity.

In combination with some embodiments of the first aspect, in some embodiments, determining the second resource for downlink transmission and/or reception in the SBFD time unit based on the first information and the second information includes:

determining, based on the first information, the numerical count of the first VRBs included in the each VRB bundle, and the first frequency domain range of the each VRB bundle, within each frequency domain range available for downlink transmission and/or reception in the BWP, a numerical count of second VRBs included in a VRB bundle available for downlink transmission and/or reception in the first resource indicated by the second information and a second frequency domain range of the VRB bundle available for downlink transmission and/or reception in the first resource indicated by the second information, in which the numerical count of the second VRBs is less than or equal to the numerical count of the first VRBs, and the second frequency domain range is the same as the first frequency domain range or is a subset of the first frequency domain range;

determining a PRB bundle to which the VRB bundle available for downlink transmission and/or reception in the first resource indicated by the second information is interleavedly mapped, and determining a PRB in the PRB bundle as the second resource.

In the above embodiment, the numerical count of the second VRBs included in the VRB bundle available for the downlink transmission and/or reception and the second frequency domain range of the VRB bundle available for downlink transmission and/or reception are determined, and the PRB bundle to which the VRB bundle available for downlink transmission and/or reception in the first resource indicated by the second information is interleavedly mapped is determined, and the PRB in the PRB bundle is determined as the second resource. Thus, the VRB bundle is mapped to the PRB bundle for downlink transmission and/or reception in a case where the resource allocation mode is type 1 and the interleaved mapping mode is used, ensuring an accuracy of resource mapping under different resource allocation modes and different mapping modes, ensuring that all resources after mapping may be used for the downlink transmission and/or reception, and preventing part of VRB bundles from being mapped to a PRB bundle that cannot be used for the downlink transmission and/or reception.

In combination with some embodiments of the first aspect, in some embodiments, the method further includes: receiving fifth information sent by the network device, in which the fifth information is used to instruct the terminal to adopt interleaved mapping or non-interleaved mapping.

In the above embodiment, by receiving the fifth information, the mapping mode adopted when mapping the VRB to the PRB may be determined. Thus, the VRB may be mapped to the PRB available for the downlink transmission and/or reception according to different mapping modes by using different resource mapping rules, ensuring that all resources after mapping may be used for the downlink transmission and/or reception.

In combination with some embodiments of the first aspect, in some embodiments, the method further includes: receiving downlink data or a downlink channel using the second resource.

In the above embodiment, the downlink data or the downlink channel is received using the second resource, since the second resource may be used for the downlink transmission and/or reception, a downlink transmission problem resulted by part of VRBs being mapped to a PRB that cannot be used for the downlink transmission and/or reception is avoided, thus enhancing stability of a communication system.

In combination with some embodiments of the first aspect, in some embodiments, the frequency domain range unavailable for downlink transmission and/or reception includes:
a frequency domain range for an uplink subband; or a frequency domain range for an uplink subband and a guard band.

In the above embodiment, the frequency domain range unavailable for the downlink transmission and/or reception may be determined according to communication requirements, thus enhancing flexibility of a communication system. By determining the guard band as the frequency domain range available for the downlink transmission and/or reception, the frequency domain range for the downlink transmission and/or reception may be increased, and an efficiency of the downlink transmission and/or reception may be improved.

In a second aspect, embodiments of the present disclosure provide a resource determination method. The method includes:
sending first information and second information to a terminal; in which the first information is used to indicate a frequency domain range unavailable for downlink transmission and/or reception, the second information is used to indicate a first resource allocated by the network device to the terminal, and the first information and the second information are used to assist the terminal in determining a second resource for downlink transmission and/or reception in a SBFD time unit.

In the above embodiment, the network device may send the first information and the second information to the terminal, thus solving the problem of resource mapping during downlink transmission and/or reception, and improving a resource mapping efficiency and a communication efficiency.

In combination with some embodiments of the second aspect, in some embodiments, the first resource includes one or more RBGs, and the method further includes:
sending third information to the terminal, in which the third information is used to configure the RBGs, and the third information is used to assist the terminal in determining a numerical count of VRBs included in each RBG within a frequency domain range of a BWP and a frequency domain range of the each RBG, in which the numerical count of the VRBs and the frequency domain range are determined by the terminal according to the bandwidth information of the BWP, the starting position of the BWP, and the third information.

In the above embodiment, the network device may send the third information to the terminal, such that the terminal determines the numerical count of VRBs included in each RBG within the frequency domain range of the BWP and the frequency domain range of the each RBG, to determine the second resource for downlink transmission and/or reception in the SBFD time unit. Thus, the terminal may map all VRBs in the RBG to PRBs for downlink transmission and/or reception in a case where a resource allocation mode is type 0, solving the problem of the resource mapping during the downlink transmission and/or reception and preventing part of VRBs from being mapped to PRBs that cannot be used for the downlink transmission and/or reception.

In combination with some embodiments of the second aspect, in some embodiments, the second resource is a PRB to which a VRB determined by the terminal is non-interleavedly mapped, the VRB is determined by the terminal based on the first information and the numerical count of VRBs included in each RBG within the frequency domain range of the BWP and the frequency domain range of the each RBG, and the VRB is a VRB for downlink transmission and/or reception in the first resource indicated by the second information.

In the above embodiment, with determining the PRB after non-interleaved mapping as the second resource, it may be achieved that the terminal may map all VRBs in the RBG to PRBs used for the downlink transmission and/or reception in a case where a resource allocation mode is type 0, thus ensuring an accuracy of resource mapping under different resource allocation modes and ensuring that all resources after mapping may be used for the downlink transmission and/or reception.

In combination with some embodiments of the second aspect, in some embodiments, the first resource includes a plurality of consecutive VRBs, the second resource is a PRB to which a VRB determined by the terminal is non-interleavedly mapped, the VRB is determined by the terminal within a frequency domain range of a BWP based on the first information, and the VRB is a VRB for downlink transmission and/or reception in the first resource indicated by the second information.

In the above embodiment, with determining the PRB to which the VRB for downlink transmission and/or reception is non-interleavedly mapped as the second resource, it may be achieved that the terminal maps part of or all of the consecutive VRBs allocated by the network device to the PRB for the downlink transmission and/or reception in a case where the resource allocation mode is type 1 and a non-interleaved mapping mode is used, thus ensuring an accuracy of resource mapping under different resource allocation modes and different mapping modes, ensuring that all resources after mapping may be used for the downlink transmission and/or reception, and preventing part of VRBs from being mapped to a PRB that cannot be used for the downlink transmission and/or reception.

In combination with some embodiments of the second aspect, in some embodiments, the first resource includes a plurality of consecutive VRBs, and the method further includes:

sending fourth information to the terminal, in which the fourth information is used for interleaving configuration, and the fourth information is used to assist the terminal in determining a numerical count of first VRBs included in each VRB bundle within a frequency domain range of a BWP and a first frequency domain range of the each VRB bundle, the numerical count of first VRBs and the first frequency domain range are determined by the terminal based on bandwidth information of the BWP, a starting position of the BWP, and the fourth information; the fourth information is also used to assist the terminal in determining a numerical count of PRBs included in each PRB bundle within the frequency domain range of the BWP and a frequency domain range of the each PRB bundle, and the numerical count of PRBs and the frequency domain range are determined by the terminal based on the bandwidth information of the BWP, the starting position of the BWP and the fourth information, in which a bundle configuration of the PRB bundle is the same as a bundle configuration of the VRB bundle.

In the above embodiment, the fourth information is sent to the terminal to determine a numerical count of VRB bundles and a numerical count of PRB bundles within a range of the BWP, and the frequency domain ranges of the VRB bundles and the frequency domain ranges of the PRB bundles. Thus, resource mapping may be achieved by using the VRB bundles and the PRB bundles in a case where a resource allocation mode is type 1 and an interleaved mapping mode is used, thus reducing mapping complexity.

In combination with some embodiments of the second aspect, in some embodiments, the second resource is a PRB in a PRB bundle to which a VRB bundle available for downlink transmission and/or reception in the first resource indicated by the second information is interleavedly mapped and that is determined by the terminal, and a numerical count of second VRBs included in the VRB bundle available for downlink transmission and/or reception in the first resource indicated by the second information and a second frequency domain range of the VRB bundle available for downlink transmission and/or reception in the first resource indicated by the second information are determined by the terminal based on the first information, the numerical count of the first VRBs included in the each VRB bundle, and the first frequency domain range of the each VRB bundle, within each frequency domain range available for downlink transmission and/or reception in the BWP, in which the numerical count of the second VRBs is less than or equal to the numerical count of the first VRBs, and the second frequency domain range is the same as the first frequency domain range or is a subset of the first frequency domain range.

In the above embodiment, the numerical count of the second VRBs included in the VRB bundle available for the downlink transmission and/or reception and the second frequency domain range of the VRB bundle available for downlink transmission and/or reception are determined, and the PRB bundle to which the VRB bundle available for downlink transmission and/or reception in the first resource indicated by the second information is interleavedly mapped is determined, and the PRB in the PRB bundle is determined as the second resource. Thus, the VRB bundle is mapped to the PRB bundle for downlink transmission and/or reception in a case where the resource allocation mode is type 1 and the interleaved mapping mode is used, ensuring an accuracy of resource mapping under different resource allocation modes and different mapping modes, ensuring that all resources after mapping may be used for the downlink transmission and/or reception, and preventing part of VRB bundles from being mapped to a PRB bundle that cannot be used for the downlink transmission and/or reception.

In combination with some embodiments of the second aspect, in some embodiments, the method further includes:
sending fifth information to the terminal; in which the fifth information is used to instruct the terminal to adopt interleaved mapping or non-interleaved mapping.

In the above embodiment, by sending the fifth information, the terminal may be assisted in determining the mapping mode adopted when mapping the VRB to the PRB may be determined. Thus, the VRB may be mapped to the PRB available for the downlink transmission and/or reception according to different mapping modes by using different resource mapping rules, ensuring that all resources after mapping may be used for the downlink transmission and/or reception.

In combination with some embodiments of the second aspect, in some embodiments, the method further includes:
sending downlink data or a downlink channel using the second resource.

In the above embodiment, the downlink data or the downlink channel is sent using the second resource, since the second resource may be used for the downlink transmission and/or reception, a downlink transmission problem resulted by part of VRBs being mapped to a PRB that cannot be used for the downlink transmission and/or reception is avoided, thus enhancing stability of a communication system.

In a third aspect, embodiments of the present disclosure provide a resource determination method. The method includes:

sending, by a network device, first information and second information to a terminal; and
determining, by the terminal, a second resource for downlink transmission and/or reception in a SBFD time unit based on the first information and the second information; in which the first information is used to indicate a frequency domain range unavailable for downlink transmission and/or reception, and the second information is used to indicate a first resource allocated by the network device to the terminal.

In the above embodiment, the resource determination method is provided to solve the problem of resource mapping during downlink transmission and/or reception, and improve a resource mapping efficiency and a communication efficiency.

In a fourth aspect, embodiments of the present disclosure provide a first resource determination apparatus. The apparatus includes:

a receiving unit, configured to receive first information and second information sent by a network device, in which the first information is used to indicate a frequency domain range unavailable for downlink transmission and/or reception, and the second information is used to indicate a first resource allocated by the network device to the terminal; and
a determining unit is configured to determine a second resource for downlink transmission and/or reception in a SBFD time unit based on the first information and the second information.

In a fifth aspect, embodiments of the present disclosure provide a second resource determination apparatus. The apparatus includes:

a sending unit, configured to send first information and second information to a terminal,
in which the first information is used to indicate a frequency domain range unavailable for downlink transmission and/or reception, the second information is used to indicate a first resource allocated by the network device to the terminal, and the first information and the second information are used to assist the terminal in determining a second resource for downlink transmission and/or reception in a SBFD time unit.

In a sixth aspect, embodiments of the present disclosure provide a communication device. The communication device includes: one or more processors, and one or more memories for storing instructions; in which the processor is configured to call the instructions to enable the communication device to perform the resource determination method as described in any one of the first aspect and the second aspect, and optional implementations of the first aspect and the second aspect.

In a seventh aspect, embodiments of the present disclosure provide a communication system. The communication system includes a terminal UE and a network device. The terminal UE is configured to implement the method as described in the first aspect or the optional implementation of the first aspect. The network device is configured to implement the method as described in the second aspect or the optional implementation of the second aspect.

In an eighth aspect, embodiments of the present disclosure provide a storage medium having instructions stored thereon. When the instructions are performed on a communication device, the communication device is caused to perform the method as described in any one of the first aspect, and the optional implementation of the first aspect, the second aspect or the optional implementation of the second aspect.

In a ninth aspect, an embodiment of the present disclosure discloses a program product which, when performed by a communication device, causes the communication device to perform the method as described in the first aspect, the optional implementation of the first aspect, the second aspect, or the optional implementation of the second aspect.

In a tenth aspect, an embodiment of the present disclosure discloses a computer program which, when performed on a computer, causes the computer to perform the method as described in the first aspect, the optional implementation of the first aspect, the second aspect, or the optional implementation of the second aspect.

It is understandable that the first resource determination apparatus, the second resource determination apparatus, the communication device, the communication system, the storage medium, the program product, and the computer program are all configured to perform the method disclosed in the embodiments of the present disclosure. Therefore, for beneficial effects that may be achieved by the first resource determination apparatus, the second resource determination apparatus, the communication device, the communication system, the storage medium, the program product, and the computer program, reference may be made to the beneficial effects of the corresponding method, and details are not repeated herein.

The present disclosure discloses a resource determination method, a resource determination apparatus, and a communication device, a communication system and a storage medium. In some embodiments, terms such as resource determination method, information processing method, and communication method, etc. may be replaced with each other, terms such as resource determination apparatus, information processing apparatus, communication apparatus, etc. may be replaced with each other, and terms such as information processing system, communication system, etc. may be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment may be implemented as an independent embodiment, and respective steps may be arbitrarily combined. For example, a solution after removing some steps in a certain embodiment can also be implemented as an independent embodiment, and an order of the steps in a certain embodiment may be arbitrarily exchanged. In addition, optional implementations in a certain embodiment may be arbitrarily combined. In addition, respective embodiments may be arbitrarily combined with other, for example, some or all steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the present disclosure are only for the purpose of describing specific embodiments and are not intended to limit the present disclosure.

In embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, a noun after the article may be understood as a singular expression or a plural expression.

In embodiments of the present disclosure, "a plurality of" refers to two or more.

In some embodiments, the terms "at least one of", "one or more", "a plurality of", "multiple", etc. may be used interchangeably.

In embodiments of the present disclosure, descriptions such as "at least one of A, B, C...", "A and/or B and/or C...", etc. include a situation where any one of A, B, C... exists alone, and also include a situation where any combination of any multiple ones of A, B, C, and each situation can exist alone. For example, "at least one of A, B, C" includes a situation where A exists alone, a situation where B exists alone, a situation where C exists alone, a combination of A and B, a combination of A and C, a combination of B and C, and a combination of A, B and C. For example, A and/or B includes a situation where A exists alone, a situation where B exists alone, and a combination of A and B.

In some embodiments, the descriptions such as "in one case, A; in another case, B", "in response to one case, A; in response to another case, B", etc. may include the following technical solutions according to situations: A is executed independently of B, that is, in some embodiments, A; B is executed independently of A, that is, in some embodiments, B; A and B are selectively executed, that is, in some embodiments, one is selected from A and B to be executed; both A and B are executed, that is, in some embodiments, A and B. When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "apparatus", the "first apparatus" and the "second apparatus" may be the same apparatus or different apparatuses, and their types may be the same or different. For another example, if the descriptive object is "information", the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, terms such as "in response to ...", "in response to determining ...", "in a case of ...", "upon", "when", "if", "in case of", etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "less than", "less than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names mentioned in the embodiments, and terms such as "apparatus", "equipment", "device", "circuit", "network element", "node", "function", "unit", "section", "system", "network", "chip", "chip system", "entity", and "subject" and the like may be used interchangeably.

In some embodiments, terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the present disclosure can also be applied to a structure in which communication between the access network device, the core network device, or the network device and the terminal is replaced by communication between multiple terminals (for example, also be referred to as device-to-device (D2D), vehicle-to-everything (V2X), etc.). In this case, the terminal can also be configured to have a structure that has all or part of the functions of the access network device. In addition, language such as "uplink" and "downlink" can also be replaced by the language corresponding to the communication between the terminals (for example, "side"). For example, an uplink channel, a downlink channel, etc. may be replaced by a side channel, and an uplink, a downlink, etc. may be replaced by a side link.

In some embodiments, the terminal may be replaced by the access network device, the core network device, or the network device. In this case, the access network device, the core network device, or the network device may also be configured to have a structure that has all or part of the functions of the terminal.

In some embodiments, a name of information, etc. is not limited to names mentioned in the embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" and the like may be used interchangeably.

In some embodiments, terms such as "uplink", "up link", "physical uplink" may be interchangeable, and terms such as "downlink", "down link", "physical downlink" may be interchangeable, and terms such as "side", "sidelink", "side communication", "sidelink communication", "direct connection", "direct link", "direct communication", "direct link communication" and the like may be interchangeable.

In some embodiments, terms "downlink control information (DCI)", "downlink (DL) assignment", "DL DCI", "uplink (UL) grant", "UL DCI" and the like may be used interchangeably.

In some embodiments, terms such as "physical downlink shared channel (PDSCH)", "DL data" and the like may be interchangeable, and terms such as "physical uplink shared channel (PUSCH)", "UL data" and the like may be interchangeable.

In some embodiments, terms such as "radio", "wireless", "radio access network (RAN)", "access network (AN)", "RAN-based" and the like may be used interchangeably.

In some embodiments, the terms "search space", "search space set", "search space configuration", "search space set configuration", "control resource set (CORESET)", "CORESET configuration" and the like may be interchangeable.

In some embodiments, terms such as "synchronization signal (SS)", "synchronization signal block (SSB)", "reference signal (RS)", "pilot", "pilot signal" and the like may be used interchangeably.

In some embodiments, the terms such as "moment", "time point", "time", "time position" and the like may be interchangeable, and the terms such as "duration", "period", "time window", "window", "time" and the like may be interchangeable.

In some embodiments, the terms "component carrier (CC)", "cell", "frequency carrier", "carrier frequency" and the like may be used interchangeably.

In some embodiments, terms such as "resource block (RB)", "physical resource block (PRB)", "sub-carrier group (SCG)", "resource element group (REG)", "PRB pair", "RB pair", "resource element (RE)" and the like may be used interchangeably.

In some embodiments, the terms such as "wireless access scheme", "waveform", etc. may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like may be used interchangeably.

In some embodiments, the terms such as "frame", "radio frame", "subframe", "slot", "sub-slot", "mini-slot", "symbol", "symbol", "transmission time interval (TTI)" and so on may be used interchangeably.

In some embodiments, "obtain", "acquire", "get", "receive", "transmit", "bidirectional transmission", "send and/or receive" may be interchangeable, and may be interpreted as receiving from other entities, obtaining from a protocol, obtaining by self-processing, autonomous implementation, etc.

In some embodiments, the terms such as "send", "transmit", "report", "issue", "transmit", "bi-directionally transmit", "send and/or receive" and the like may be used interchangeably.

In some embodiments, "predetermined" or "preset" may be interpreted as being pre-specified in a protocol, etc., or may be interpreted as an apparatus performing a pre-set action, etc.

In some embodiments, "determining" may be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

In some embodiments, the determination or judgment may be performed by a value represented by 1 bit (0 or 1), or by a true/false value (Boolean value) represented by true or false, or by comparison of numerical values (for example, comparison with a predetermined value), but is not limited thereto.

In some embodiments, "network" may be interpreted as apparatuses included in the network (e.g., access network device, core network device, etc.).

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment. The correspondences in the tables of the disclosure may be configured or predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables of the disclosure may not be configured, and the above tables may be adjusted appropriately, such as splitting, combining, and the like. The names of the parameters shown in the titles of the above tables may be configured to other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables. The term "predefine" in the disclosure may be understood as define, predefine, store, pre-store, pre-negotiate, pre-configure, solidify, or pre-fire.

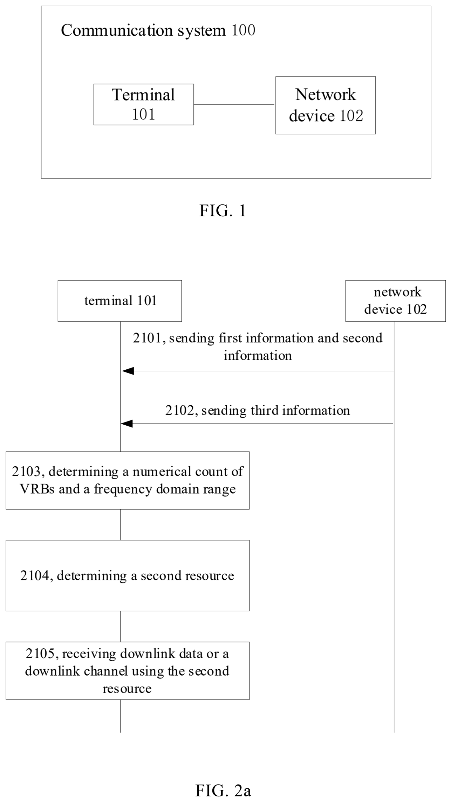

FIG. 1 is a structural schematic diagram illustrating a communication system provided by an embodiment of the disclosure. As shown in FIG. 1, the communication system 100 may include a terminal 101 and a network device 102. The network device 102 may include at least one of an access network device or a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU, which is centrally controlled by the CU, but is not limited thereto.

In some embodiments, the core network device may be one device including one or more network elements, or may be a plurality of devices or a group of devices each including all or part of one or more network elements. The network element may be virtual or physical. The core network, for example, includes at least one of an evolved packet core (EPC), a 5G core network (5GCN), or the next generation core (NGC).

It may be understood that the communication system described in the embodiments of the present disclosure aims to more clearly illustrate the technical solution of the embodiments of the present disclosure, and does not constitute a limitation on the technical solution disclosed in the embodiments of the present disclosure. A person skilled in the art can know that with the evolution of the system architecture and the emergence of new business scenarios, the technical solution disclosed in the embodiments of the present disclosure are also applicable to similar technical problems.

The following embodiments of the present disclosure may be applied to the communication system 100 or part of the subjects shown in FIG. 1, but are not limited thereto. The subjects shown in FIG. 1 are examples, and the communication system may include all or part of the subjects in FIG. 1, or may include other subjects other than those shown in FIG. 1, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

Various embodiments of the present disclosure may be applied to PDSCH resource mapping in an SBFD scenario.

Specifically, a carrier component is divided into a plurality of subbands in a frequency domain on a downlink or flexible (F) symbol. A plurality of base stations (SBs) include one uplink subband and at least one downlink (DL) subband. The base station may send a DL signal in the DL subband and receive a UL signal in the UL subband simultaneously. The DL or F symbol may be a DL or F symbol configured by TDD-UL-DL-ConfigCommon or TDD-UL-DL-ConfigDedicated, or indicated by DCI2-0. When a symbol includes both the DL subband and the UL subband in the frequency domain, the symbol may be referred to as an SBFD symbol.

In addition, a guard band (GB) may be present between the DL subband and the UL subband to reduce interference between the DL signal in the DL subband and the UL signal in the UL subband through frequency domain isolation. In the SBFD symbol, frequency domain ranges available for DL transmission and/or reception may be discontinuous. A possible situation is that the GB and the UL subband are unavailable for the DL transmission and/or reception.

In an embodiment, in PDSCH transmission and/or reception, there are two frequency domain resource allocation solutions:

Type 0 physical downlink shared channel (PDSCH) frequency domain resource allocation (FDRA), which indicates a RBG to be used by means of a bitmap, in which each RBG includes one or more VRBs, and the VRB is mapped to a PRB by means of non-interleaved mapping; and
Type 1 PDSCH FDRA, which indicates consecutive VRBs to be used through a resource indication value (RIV), in which the VRB is mapped to a PRB by means of interleaved mapping or non-interleaved mapping.

FIG. 2a is a schematic diagram illustrating an interaction of a resource determination method according to an embodiment of the present disclosure. As shown in FIG. 2a, the embodiment of the present disclosure relates to the resource determination method, which is used in a communication system 100. The method includes the following steps.

At step 2101, a network device 102 sends first information and second information to a terminal 101.

In some embodiments, the terminal 101 may receive the first information and the second information.

In some embodiments, the terminal 101 may receive the first information and the second information sent by the network device 102.

In some embodiments, the first information may be used to indicate a frequency domain range unavailable for downlink transmission and/or reception.

In some embodiments, the frequency domain range unavailable for downlink transmission and/or reception may include at least one of a frequency domain range for an uplink subband or a frequency domain range for a guard band. For example, the frequency domain range unavailable for downlink transmission and/or reception may be the frequency domain range for the uplink subband, or may be a frequency domain range for the uplink subband and the guard band.

In some embodiments, the first information may be used to indicate a frequency domain range available for downlink transmission and/or reception.

In some embodiments, the frequency domain range available for downlink transmission and/or reception may include at least one of a frequency domain range for a downlink subband or the frequency domain range for the guard band. For example, the frequency domain range available for downlink transmission and/or reception may be the frequency domain range for downlink subband, or may be a frequency domain range for the downlink subband and the guard band.

In some embodiments, the present disclosure does not limit the name of the first information, which may be, for example, "non-downlink frequency domain range" or the like.

In some embodiments, the second information may be used to indicate a first resource allocated (or scheduled) by the network device for the terminal.

In some embodiments, the first resource may include a resource block group (RBG).

For example, in a case where a frequency domain resource allocation mode is type 0, the network device may allocate the RBG to the terminal. For Type 0 PDSCH frequency domain resource allocation (FDRA), the network device may indicate the RBG to be used by means of a bitmap, and each RBG includes one or more VRBs. During resource mapping, the VRB may be mapped to a PRB by means of non-interleaved mapping.

In some embodiments, the present disclosure does not limit the name of the second information, which may be, for example, "resource information", "resource block group information", etc.

In some embodiments, the network device may send the first information and the second information to the terminal by sending a message or signaling. Illustratively, the network device 102 sends first signaling which may include indication information of the frequency domain range not available for downlink transmission and/or reception and indication information of a first resource allocated by the network device to the terminal. Correspondingly, the terminal 101 may receive the first signaling. The first signaling may be, for example, physical downlink control information (DCI) signaling, but is not limited thereto, and may also be other signaling (such as radio resource control (RRC) signaling, etc.).

For example, in an embodiment, the network device sends the DCI signaling to the terminal, and indicates RBGs allocated to the UE through a bitmap in the DCI signaling. For example, if the bitmap in the DCI signaling is 0001110100100, it indicates that RBG#3, RBG#4, RBG#5, RBG#7, RBG#10 are used for downlink transmission and/or reception.

At step 2102, the network device 102 sends third information to the terminal 101.

In some embodiments, the terminal 101 may receive the third information.

In some embodiments, the terminal 101 may receive the third information sent by the network device 102.

In some embodiments, the third information is used to configure the RBGs. A RBG configuration may include RBG configuration#1, RBG configuration#2, and may also include other configuration types, which are not limited in the disclosure. The RBG configuration may assist the terminal in determining a RBG size.

In some embodiments, the third information is also used to assist the terminal in determining a numerical count of VRBs and a frequency domain range. In some embodiments, the third information may be used to assist the terminal in determining a numerical count of VRBs included in each RBG within a frequency domain range of a BWP and a frequency domain range of the each RBG. Specifically, the numerical count of VRBs and the frequency domain range are determined by the terminal based on bandwidth information of the BWP, a starting position of the BWP, and the third information.

In some embodiments, the present disclosure does not limit the name of the third information, which may be, for example, "RBG configuration parameter", "RBG configuration information", etc.

In some embodiments, the network device may send the third information to the terminal by sending a message or signaling. Illustratively, the network device 102 sends second signaling, which may include the third information, that is, information for configuring the RBG. Correspondingly, the terminal 101 may receive the second signaling. The second signaling may be, for example, DCI signaling, but is not limited thereto, and may also be other signaling (such as RRC signaling, etc.).

For example, in some embodiments, the network device may send the third information to the terminal, to configure the RBG as configuration#1.

At step 2103, the terminal 101 determines the numerical count of VRBs and the frequency domain range.

In some embodiments, the numerical count of VRBs may be the numerical count of VRBs included in an RBG. For example, the numerical count of VRBs may be the numerical count of VRBs included in each RBG within the frequency domain range of the BWP.

In some embodiments, the frequency domain range may be the frequency domain range of the RBG. For example, the frequency domain range may be the frequency domain range of each RBG within the frequency domain range of the BWP.

In some embodiments, the terminal 101 may determine the numerical count of VRBs included in each RBG within the frequency domain range of the BWP and the frequency domain range of the each RBG.

In some embodiments, the terminal may determine the numerical count of VRBs included in each RBG within the frequency domain range of the BWP and the frequency domain range of the each RBG according to bandwidth information of the BWP, a starting position of the BWP, and the third information.

In some embodiments, the terminal 101 may obtain the bandwidth information of the BWP and the starting position of the BWP. For example, the terminal 101 may obtain the bandwidth information of the BWP and the starting position of the BWP from the network device 102, which is not limited in the present disclosure.

In some embodiments, the frequency domain range of the BWP may be determined by the bandwidth information of the BWP and the starting position of the BWP. The starting position of the BWP may be an index of a starting VRB of the BWP in a common resource block (CRB).

In some embodiments, the terminal may first determine the numerical count of VRBs included in each RBG, and then determine the frequency domain range of each RBG. For example, the terminal may determine the numerical count of VRBs included in each RBG within the frequency domain range of the BWP according to the bandwidth information of the BWP and the third information, and determine the frequency domain range of the each RBG in combination with the starting position of the BWP.

In some embodiments, the terminal may simultaneously determine the numerical count of VRBs included in each RBG and the frequency domain range of each RBG. For example, the terminal may directly determine the numerical count of VRBs included in each RBG within the frequency domain range of the BWP and the frequency domain range of the each RBG according to the bandwidth information of the BWP and the third information in combination with the starting position of the BWP.

In some embodiments, the BWP may be understood as continuous RB resources in a frequency domain, and related configuration information of the BWP may be indicated by the network device, and may include the bandwidth information of the BWP, for example, occupying 64 RBs. The related configuration information of the BWP may also include other information, such as, sub-carrier space (SCS), etc., and details may not be described herein. The related configuration information of the BWP may be configured through RRC signaling or other signaling, and details may not be described herein.

For example, in an embodiment, a bandwidth of the BWP occupies 70 RBs, and the terminal determines the RBG according to the BWP and a related configuration. Assumed that the RBG configuration information is RBG configuration #1, a RGB configuration table is shown in Table 1 below. Then, the RBG size may be determined to be 4 RBs according to the bandwidth of the BWP (i.e., the BWP size in Table 1 below).

Table 1 RGB configuration table

| BWP size | configuration 1 | configuration 2 |
|----------|-----------------|-----------------|
| 1 - 36 | 2 | 4 |
| 37 - 72 | 4 | 8 |
| 73 - 144 | 8 | 16 |
| 145 - 275 | 16 | 16 |

In some embodiments of the present disclosure, a size of each RBG and RBs included in each RBG may be determined according to the following formula:

$$N_{RBG} = \left\lceil \frac{\left(N_{BWP}^{size} + \left(N_{BWP}^{start} \bmod P\right)\right)}{P} \right\rceil \qquad \text{(Formula 1)}$$

where $N_{RBG}$ is the numerical count of RBGs.

In a possible implementation, $N_{BWP}^{size}$ is the size of the BWP, that is, the numerical count of VRBs included in the BWP, and $N_{BWP}^{start}$ is an index of a starting VRB of the BWP in a CRB. The BWP may be one of a plurality of BWPs configured in the terminal.

In another possible implementation, $N_{BWP}^{size}$ is the numerical count of VRBs included in a frequency domain range available for DL transmission in the BWP, and $N_{BWP}^{start}$ is an index of a starting VRB available for DL transmission in the BWP in the CRB.

P is the RBG size determined by Table 1 above, and mod represents a remainder operation, then the numerical count of RBGs in the downlink subband may be determined. A size of the first RBG may be determined by the following formula:

$$RBG_0^{size} = P - N_{BWP}^{start} \bmod P \qquad \text{(Formula 2)}$$

where $RGB_0^{size}$ represents the size of the first RBG. If $\left(N_{BWP}^{start} + N_{BWP}^{size}\right) \bmod P > 0$, a size of the last RBG may be determined by the following formula:

$$RBG_{last}^{size} = \left(N_{BWP}^{start} + N_{BWP}^{size}\right) \bmod P, \qquad \text{(Formula 3)}$$

otherwise, $BG_{last}^{size} = P$,

where the size of other RBG is P.

At step 2104, the terminal 101 determines a second resource.

In some embodiments, the second resource may be a resource used for downlink transmission and/or reception.

In some embodiments, the present disclosure does not limit the name of the second resource, which may be, for example, "downlink resource" or the like.

In some embodiments, the terminal 101 may determine a second resource for downlink transmission and/or reception in a subband full duplex (SBFD) time unit.

In some embodiments, the second resource is a physical resource block PRB to which a VRB determined by the terminal is non-interleavedly mapped. The VRB is determined by the terminal based on the first information and the numerical count of VRBs included in each RBG within the frequency domain range of the BWP and the frequency domain range of the each RBG, and the VRB is a VRB for downlink transmission and/or reception in the first resource indicated by the second information.

In some embodiments, the SBFD time unit may include both an uplink subband (UL subband) and a downlink subband (DL subband) in a frequency domain. In some examples, the SBFD time unit may further include a guard band (GB) in the frequency domain. In some examples, when there is at least one SBFD symbol among a plurality of symbols included in a slot, the slot may be referred to as a SBFD slot.

In some embodiments, a "time unit" may be a "slot" or a "symbol", which is not limited in the present disclosure.

In some embodiments, the frequency domain resource allocation mode is type 0, and determining, by the terminal, the second resource for downlink transmission and/or reception in the SBFD time unit includes: determining a VRB for downlink transmission and/or reception in the first resource indicated by the second information based on the first information and the numerical count of VRBs included in each RBG within the frequency domain range of the BWP and the frequency domain range of the each RBG; and determining a PRB to which the VRB is non-interleavedly mapped as the second resource.

For example, the terminal may determine the VRB available for downlink transmission and/or reception according to the numerical count of VRBs included in each RBG and an intersection of the frequency domain range of the each RBG and a frequency domain range indicated by the first information.

For example, the network device indicates the RBG (i.e., the first resource) allocated to the UE through a bitmap in the DCI, for example, 0001110100100, indicating that VRBs in RBG#3, RBG#4, RBG#5, RBG#7, and RBG#10 are used for transmission and/or reception. The frequency domain range unavailable for downlink transmission and/or reception indicated by the first information is RBG#5, then an intersection RBG#5 cannot be used for the downlink transmission and/or reception, and VRBs in the remaining RBG#3, RBG#4, RBG#7, and RBG#10 may be used for the downlink transmission and/or reception.

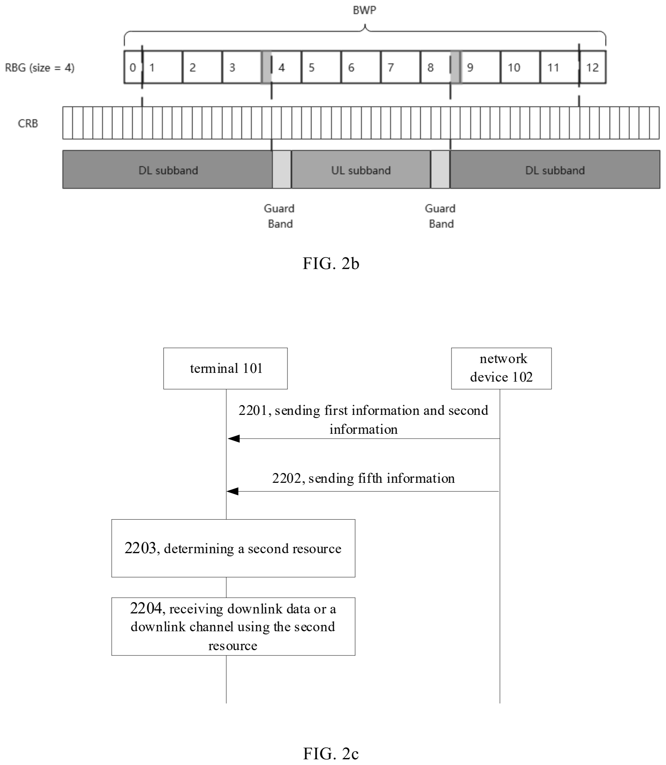

For example, as shown in FIG. 2b, a VRB being in a RBG and overlapping with the frequency domain range available for DL transmission and/or reception is a VRB available for DL transmission and/or reception, and a PRB to which the VRB available for DL transmission and/or reception in the RBG allocated in the DCI is non-interleavedly mapped is a PRB for receiving the DL transmission and/or reception. For example, the GB and the UL subband are not available for the DL transmission and/or reception, and scheduled RBGs include RBG#1, RBG#2, RBG#3, RBG#4, RBG#5, RBG#6, RBG#7, and RBG#8. Then, four VRBs in RBG#1, RBG#2, and RBG#3 are all the VRBs available for DL transmission and/or reception, the first VRB in RBG#4 is the VRB available for DL transmission and/or reception, the last VRB in RBG#8 is the VRB available for DL transmission and/or reception, and the numerical count of the VRBs available for DL transmission and/or reception in RBG#5, RBG#6, and RBG#7 is 0.

In some embodiments, the terminal may determine a PRB to which the VRB is non-interleavedly mapped as the second resource.

In other words, the terminal may perform resource mapping to map the VRB to the PRB, and the mapped PRB resource may be used for downlink transmission and/or reception, for example, for receiving downlink data or a downlink channel.

For example, in an embodiment, VRB Id#m is mapped to PRB Id#m, that is, the bitmap in the DCI signaling received by the terminal indicates that VRB Id#0-m in RBG#n is used for DL transmission and/or reception, then PRB Id#0-m is used for DL transmission and/or reception, and the PRB used for DL transmission and/or reception is the second resource.

At step 2105, the terminal 101 receives the downlink data or the downlink channel using the second resource.

In some embodiments, the terminal uses the second resource to perform downlink reception, that is, to receive the downlink data or the downlink channel. Therefore, all VRBs may be mapped to PRBs used for DL transmission and/or reception, and a resource utilization efficiency may be improved.

The communication method involved in the embodiment of the present disclosure may include at least one of steps 2101 to 2105. For example, step 2101 may be implemented as an independent embodiment, step 2103 may be implemented as an independent embodiment, steps 2101+2102+2104 may be implemented as an independent embodiment, and steps 2101+2102+2103 may be implemented as an independent embodiment, but are not limited thereto.

In some embodiments, steps 2101 and 2102 may be performed in an interchangeable order or simultaneously.

In some embodiments, step 2102, step 2103, step 2104, and step 2105 are optional, and one or more of these steps may be omitted or replaced in different embodiments.

In some embodiments, steps 2102 and 2103 may be performed before step 2104; steps 2102 and 2103 may be performed before or after step 2101 or simultaneously with step 2101, which is not limited in the disclosure.

In an example, this embodiment of the present disclosure may be applicable to a scenario where the frequency domain resource allocation mode is type 0 (i.e., Type 0 PDSCH FDRA). The disclosure does not limit other possible applicable scenarios.

In the implementation or embodiment, unless there is any contradiction, each step may be independent,

**EP 4 704 482 A1**

arbitrarily combined or exchanged in order, the optional implementations or optional examples may be arbitrarily combined, and may be arbitrarily combined with any steps of other implementations or other embodiments.

FIG. 2c is a schematic diagram illustrating an interaction of a resource determination method according to an embodiment of the present disclosure. As shown in FIG. 2c, the embodiment of the present disclosure relates to the resource determination method, which is used in a communication system 100. The method includes the following steps.

At step 2201, a network device 102 sends first information and second information to a terminal 101.

In some embodiments, the second information may be used to indicate a first resource allocated (or scheduled) by the network device for the terminal.

In some embodiments, the first resource may include a plurality of consecutive VRBs.

For example, in a case where a frequency domain resource allocation mode is type 1, the network device may allocate the plurality of consecutive VRBs to the terminal. For Type 1 PDSCH FDRA, the network device may indicate a resource indication value (RIV) through a FDRA field included in a DCI. The RIV may be used to indicate a series of continuous VRB resources. During resource mapping, the VRB may be mapped to a PRB by means of non-interleaved mapping.

For example, in an example, the network device sends DCI signaling to the terminal, and the RIV indicated by the FDRA field included in the DCI indicates a continuous VRB resource, VRBs #2-22, indicating that VRBs #2-22 are used for downlink transmission and/or reception.

For the optional implementation of step 2201, reference may be made to the optional implementation of step S2101 in FIG. 2a and other related parts in the embodiment involved in FIG. 2a, and details may not be repeated here.

At step 2202, the network device 102 sends fifth information to the terminal 101.

In some embodiments, the terminal 101 may receive the fifth information.

In some embodiments, the terminal 101 may receive the fifth information sent by the network device 102.

In some embodiments, the fifth information is used to instruct the terminal to adopt interleaved mapping or non-interleaved mapping. In other words, the fifth information is used to indicate a resource mapping mode, and the resource mapping mode includes the interleaved mapping and the non-interleaved mapping. In other words, the fifth information is used to indicate a mode of mapping the VRB to the PRB. The VRB may be interleavedly mapped to the PRB, or the VRB may be non-interleavedly mapped to the PRB.

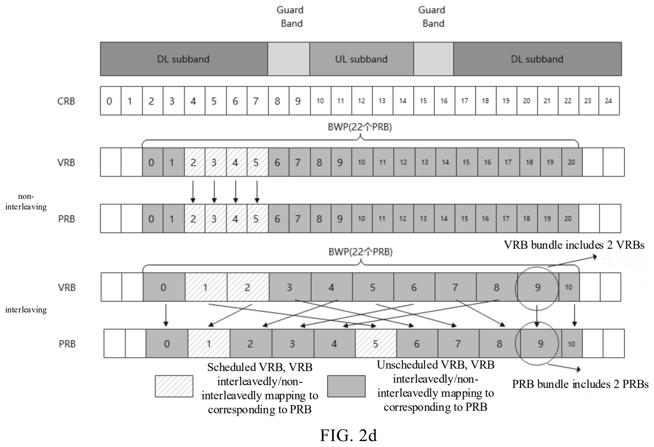

For example, the terminal may map VRBs #2-5 to PRBs #2-5 respectively by using non-interleaved mapping. The terminal may map VRB bundle #1 to PRB bundle #5 according to a certain interleaved mapping rule, by using interleaved mapping, as shown in FIG. 2d.

In some embodiments, the present disclosure does not limit the name of the fifth information, which may be, for example, "interleaving indication information" or "interleaving configuration information".

In some embodiments, the network device may send the fifth information to the terminal by sending a message or signaling. Illustratively, the network device 102 sends third signaling, which may include the fifth information, that is, information for indicating whether the terminal adopts the interleaved mapping or the non-interleaved mapping. Correspondingly, the terminal 101 may receive the third signaling. The third signaling may be, for example, DCI signaling, but is not limited thereto, and may also be other signaling (such as RRC signaling, etc.).

For example, in some embodiments, the network device may send the fifth information to the terminal to instruct the terminal to adopt the non-interleaved mapping. In some embodiments, the network device may send the fifth information to the terminal to instruct the terminal to adopt the interleaved mapping.

At step 2203, the terminal 101 determines a second resource.

In some embodiments, the second resource is a PRB to which a VRB determined by the terminal is non-interleavedly mapped, the VRB is determined by the terminal within a frequency domain range of a BWP based on the first information, and the VRB is a VRB for downlink transmission and/or reception in the first resource indicated by the second information.

In some embodiments, the frequency domain resource allocation method is type 1, and determining, by the terminal, the second resource for downlink transmission and/or reception in the SBFD time unit includes: determining, based on the first information, within a frequency domain range of a BWP, a VRB for downlink transmission and/or reception in the first resource indicated by the second information; and determining a PRB to which the VRB for downlink transmission and/or reception in the first resource indicated by the second information is non-interleavedly mapped as the second resource.

In some embodiments, the terminal may determine, based on the first information, within the frequency domain range of the BWP, the VRB for downlink transmission and/or reception in the first resource indicated by the second information. For example, the network device indicates the continuous VRBs (i.e., a first resource) allocated to the UE through the RIV in the DCI, such as VRBs #2-22.

The frequency domain range unavailable for downlink transmission and/or reception indicated by the first information is VRBs #9-15, then an intersection VRBs #9-15 is unavailable for downlink transmission and/or reception, and the remaining VRBs #2-8 and VRBs #16-22 may be used for the downlink transmission and/or reception.

16

In some embodiments, the terminal determines the PRB to which the VRB is non-interleavedly mapped as the second resource, to receive downlink data or a downlink channel. For example, in the above example, PRBs to which VRBs #2-8 and VRBs #16-22 are non-interleavedly mapped are PRBs #2-8 and PRBs #16-22, and PRBs #2-8 and PRBs #16-22 may be determined as the second resource for downlink transmission and/or reception.

For example, in an embodiment, VRB Id#m is mapped to PRB Id#m, that is, the RIV in the DCI signaling received by the terminal indicates that VRB Id#m is used for DL transmission and/or reception, then PRB Id#m is used for the DL transmission and/or reception, and the PRB used for the DL transmission and/or reception is the second resource.

For the optional implementation of step 2203, reference may be made to the optional implementation of step S2104 in FIG. 2a and other related parts in the embodiment involved in FIG. 2a, and details may not be repeated here.

At step 2204, the terminal 101 receives the downlink data or the downlink channel using the second resource.

For the optional implementation of step 2204, reference may be made to the optional implementation of step S2105 in FIG. 2a and other related parts in the embodiment involved in FIG. 2a, and details may not be repeated here.

In some embodiments, the terminal uses the second resource to perform reception, that is, to receive the downlink data or the downlink channel. Therefore, all VRBs may be mapped to PRBs used for DL transmission and/or reception, and a resource utilization efficiency may be improved.

The communication method involved in the embodiment of the present disclosure may include at least one of steps 2201 to 2204. For example, step 2201 may be implemented as an independent embodiment, step 2203 may be implemented as an independent embodiment, steps 2201+2202+2204 may be implemented as an independent embodiment, and steps 2201+2202+2203 may be implemented as an independent embodiment, but are not limited thereto.

In some embodiments, steps 2201 and 2202 may be performed in an interchangeable order or simultaneously.

In some embodiments, step 2202, step 2203, and step 2204 are optional, and one or more of these steps may be omitted or replaced in different embodiments.

In some embodiments, step 2202 may be performed before step 2203; step 2202 may be performed before or after step 2201 or simultaneously with step 2201, which is not limited in the disclosure.

In an example, this embodiment of the present disclosure may be applicable to a scenario where the frequency domain resource allocation mode is type 1 (i.e., Type 1 PDSCH FDRA), using a non-interleaved mapping mode. The disclosure does not limit other possible applicable scenarios.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

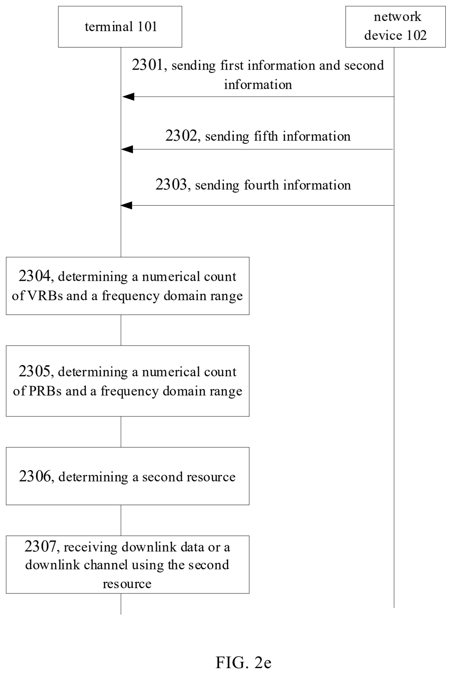

FIG. 2e is a schematic diagram illustrating an interaction of a resource determination method according to an embodiment of the present disclosure. As shown in FIG. 2e, the embodiment of the present disclosure relates to the resource determination method, which is used in a communication system 100. The method includes the following steps.

At step 2301, a network device 102 sends first information and second information to a terminal 101.

In some embodiments, the second information may be used to indicate a first resource allocated (or scheduled) by the network device for the terminal.

In some embodiments, the first resource may include a plurality of consecutive VRBs.

For example, in a case where a frequency domain resource allocation mode is type 1, the network device may allocate the plurality of consecutive VRBs to the terminal. For Type 1 PDSCH FDRA, the network device may indicate a resource indication value (RIV) through a FDRA field included in a DCI. The RIV may be used to indicate a series of continuous VRB resources. During resource mapping, the VRB may be mapped to a PRB by means of interleaved mapping.

For the optional implementation of step 2301, reference may be made to the optional implementations of step S2101 in FIG. 2a, step S2201 in FIG. 2c and other related parts in the embodiments involved in FIG. 2a and FIG. 2c, and details may not be repeated here.

At step 2302: the terminal 101 receives fifth information sent by network device 102.

In some embodiments, the terminal may map VRBs #2-5 to PRBs #2-5 respectively by using interleaved mapping. The terminal may map VRB bundle #1 to PRB bundle #5 according to a certain interleaved mapping rule, by using interleaved mapping, as shown in FIG. 2d.

For the optional implementation of step 2302, reference may be made to the optional implementations of step 2202 in FIG. 2b and other related parts in the embodiments involved in FIG. 2b, and details may not be repeated here.

At step 2303, the network device 102 sends fourth information to the terminal 101.

In some embodiments, the terminal 101 may receive the fourth information.

In some embodiments, the terminal 101 may receive the fourth information sent by the network device 102.

In some embodiments, in a case where a frequency domain resource allocation mode is type 1, and an interleaved mapping mode is used, the terminal 101 may receive the fourth information sent by the network device 102.

In some embodiments, the fourth information is used for interleaving configuration. In other words, the fourth information may be used to indicate a rule for interleaving configuration.

In some embodiments, the fourth information is used to assist the terminal in determining a numerical count of first VRBs comprised in each VRB bundle within a frequency domain range of a BWP and a first frequency domain range of the each VRB bundle, the numerical count of first VRBs and the first frequency domain range are determined by the terminal based on bandwidth information of the BWP, a starting position of the BWP, and the fourth information.

In some embodiments, the fourth information is also used to assist the terminal in determining a numerical count of PRBs comprised in each PRB bundle within the frequency domain range of the BWP and a frequency domain range of the each PRB bundle, and the numerical count of PRBs and the frequency domain range are determined by the terminal based on the bandwidth information of the BWP, the starting position of the BWP and the fourth information. A bundle configuration of the PRB bundle is the same as a bundle configuration of the VRB bundle.

In some embodiments, the present disclosure does not limit the name of the fourth information, which may be, for example, "interleaving information", "interleaving configuration information", "interleaving configuration parameter", etc.

In some embodiments, the fourth information may be a VRBToPRB-Interleaver parameter.

In some embodiments, the network device may send the fourth information to the terminal by sending a message or signaling. For example, the network device 102 sends fourth signaling, which may include the fourth information, that is, information for interleaving configuration indicated by the network device. Correspondingly, the terminal 101 may receive the fourth signaling. The fourth signaling may be, for example, DCI signaling, but is not limited thereto, and may also be other signaling (such as RRC signaling, etc.).

At step 2304, the terminal 101 determines the numerical count of VRBs and the frequency domain range.

In some embodiments, the numerical count of VRBs may be a numerical count of VRBs included in each VRB bundle within the frequency domain range of the BWP. In an example, the numerical count of VRBs may be the numerical count of VRBs included in each VRB bundle within the frequency domain range of the BWP.

In some embodiments, the frequency domain range may be a frequency domain range of the VRB bundle. In an example, the frequency domain range may be a frequency domain range of each VRB bundle within the frequency domain range of the BWP.

In some embodiments, the terminal 101 determines the numerical count of first VRBs included in each VRB bundle within the frequency domain range of the BWP and the first frequency domain range of the each VRB bundle.

In some embodiments, the terminal may determine the numerical count of first VRBs included in each VRB bundle within the frequency domain range of the BWP and the first frequency domain range of the each VRB bundle according to the bandwidth information of the BWP, the starting position of the BWP, and the fourth information. In some embodiments, the terminal 101 may obtain the bandwidth information of the BWP and the starting position of the BWP. For example, the terminal 101 may obtain the bandwidth information of the BWP and the starting position of the BWP from the network device 102, which is not limited in the present disclosure.

In some embodiments, the frequency domain range of the BWP may be determined based on the bandwidth information of the BWP and the starting position of the BWP. The starting position of the BWP may be an index of a starting VRB of the BWP in a CRB.

In some embodiments, the BWP may be understood as continuous RB resources in a frequency domain, and related configuration information of the BWP may be indicated by the network device, and may include the bandwidth information of the BWP, for example, occupying 64 RBs. The related configuration information of the BWP may also include other information, such as, sub-carrier space (SCS), etc., and details may not be described herein. The related configuration information of the BWP may be configured through RRC signaling or other signaling, and details may not be described herein.

In some embodiments, the terminal 101 may determine the numerical count of first VRBs included in each VRB bundle within the frequency domain range of the BWP and the first frequency domain range of the each VRB bundle.

For example, the terminal may determine the VRB bundle within the frequency domain range of the BWP, and the numerical count of VRB bundles is $N_{Bundle}$, which are numbered as {0, 1, ..., $N_{Bundle}$-1}.

In some embodiments of the present disclosure, the numerical count and a size of the VRB bundles within the frequency domain range of the BWP may be determined according to the following formula:

$$N_{Bundle} = \left\lceil \frac{\left( N_{BWP}^{size} + \left( N_{BWP}^{start} \bmod L \right) \right)}{L} \right\rceil \qquad \text{(Formula 4)}$$

where $N_{Bundle}$ is the numerical count of the VRB bundles within the frequency domain range of the BWP, $N_{BWP}^{size}$ is the numerical count of VRBs in the frequency domain range of the BWP, $N_{BWP}^{start}$ is an index of a starting VRB within the frequency domain range of the BWP in the CRB, L is the size of the VRB bundle, and mod represents a remainder operation. Then, the numerical count of VRB bundles within the frequency domain range of the BWP may be determined. A size of a first VRB bundle may be calculated using the following formula:

$$VRB_0^{size} = L - \mathrm{N}_{BWP}^{start} \, mod \, L \qquad \text{(Formula 5)}$$

where $VRB_0^{size}$ represents the size of the first VRB bundle within the frequency domain range of the BWP. If $\left(N_{BWP}^{start} + N_{BWP}^{size}\right) mod \, L > 0$, a size of a last VRB bundle within the frequency domain range of the BWP may be calculated using the following formula:

$$VRB_{last}^{size} = \left(N_{BWP}^{start} + N_{BWP}^{size}\right) mod \, L, \quad \text{(Formula 6)}$$

otherwise, $VRB_{last}^{size} = L$,

where the size of other VRB bundle within the frequency domain range of the BWP is L.

In other embodiments, in a SBFD time unit, a frequency domain range H of the BWP overlaps with two discontinuous downlink subbands and one uplink subband, that is, the frequency domain range of the BWP may include a third frequency domain range (frequency domain range 1, for example, a frequency domain range where a frequency domain range of a first downlink subband overlaps with the BWP) and a fourth frequency domain range (frequency domain range 2, for example, a frequency domain range where a frequency domain range of a second downlink subband overlaps with the BWP). The terminal 101 may determine the numerical count of VRBs included in each VRB bundle in the third frequency domain range and the fourth frequency domain range and the frequency domain range of each VRB bundle.
In some embodiments, the numerical count of VRBs may be the numerical count of VRBs included in each VRB bundle in the third frequency domain range/the fourth frequency domain range of the frequency domain range of the BWP. In an example, the numerical count of VRBs may be the numerical count of VRBs included in each VRB bundle in the third frequency domain range/the fourth frequency domain range.
In some embodiments, the frequency domain range may be a frequency domain range of the VRB bundle. In an example, the frequency domain range may be a frequency domain range of each VRB bundle in the third frequency domain range/the fourth frequency domain range.
In some embodiments, the terminal 101 may determine the numerical count of first VRBs included in each VRB bundle in each of frequency domain ranges of the BWP and the first frequency domain range of each VRB bundle. In other words, the terminal 101 may determine the numerical count of VRBs included in each VRB bundle and the frequency domain range of each VRB bundle in the third frequency domain range and the fourth frequency domain range respectively.
For example, the terminal may determine VRB bundles in frequency domain range 1 and frequency domain range 2 available for DL transmission and/or reception, respectively, and the $i^{th}$ frequency domain range includes $N_{Bundle,i}$ VRB bundles, which are numbered as {0, 1, ..., $N_{Bundle,i}$-1}.
In some embodiments of the present disclosure, the numerical count and a size of VRB bundles within the $i^{th}$ frequency domain range may be determined according to the following formula:

$$N_{Bundle,i} = \left\lceil \frac{\left(N_{FD,i}^{size} + \left(N_{FD,i}^{start} \, mod \, L\right)\right)}{L} \right\rceil \qquad \text{(Formula 7)}$$

where $N_{Bundle,i}$ is the numerical count of VRB bundles in the $i^{th}$ frequency domain range, $\mathrm{N}_{FD,i}^{size}$ is the numerical count of VRBs in the $i^{th}$ frequency domain range, $\mathrm{N}_{FD,i}^{start}$ is an index of a starting VRB within the $i^{th}$ frequency domain range in the CRB, L is the size of the VRB bundle, and mod represents the remainder operation, then the numerical count of VRB bundles in the $i^{th}$ frequency domain range may be determined. A size of the first VRB bundle may be calculated using the following formula:

$$VRB_{0,i}^{size} = L - N_{FD,i}^{start} \bmod L \qquad \text{(Formula 8)}$$

where $VRB_{0,i}^{size}$ represents the size of the first VRB bundle within the $i^{th}$ frequency domain range. If $\left(N_{FD,i}^{start} + N_{FD,i}^{size}\right) \bmod L > 0$, the size of the last VRB bundle within the $i^{th}$ frequency domain range may be calculated using the following formula:

$$VRB_{last,i}^{size} = \left(N_{FD,i}^{start} + N_{FD,i}^{size}\right) \bmod L \;, \qquad \text{(Formula 9)}$$

otherwise, $VRB_{last,i}^{size} = L$.

The size of other VRB bundles within the $i^{th}$ frequency domain is L.

At step 2305, the terminal 101 determines a numerical count of PRBs and a frequency domain range.

In some embodiments, the numerical count of PRBs may be a numerical count of PRBs included in a PRB bundle. In an example, the numerical count of PRBs may be the numerical count of PRBs included in each PRB bundle within the frequency domain range of the BWP.

In some embodiments, the frequency domain range may be a frequency domain range of a PRB bundle. In an example, the frequency domain range may be the frequency domain range of each PRB bundle within the frequency domain range of the BWP.

In some embodiments, the terminal 101 may determine the numerical count of PRBs included in each PRB bundle within the frequency domain range of the BWP and the frequency domain range of each PRB bundle.

In some embodiments, the terminal may determine the numerical count of PRBs included in each PRB bundle within the frequency domain range of the BWP and the frequency domain range of each PRB bundle based on the bandwidth information of the BWP, the starting position of the BWP and the fourth information.

Specifically, a bundle configuration of the PRB bundle is the same as a bundle configuration of the VRB bundle, and reference may be made to the relevant description of step 2303 above, details may not be repeated here.

At step 2306, the terminal 101 determines a second resource.

In some embodiments, the terminal 101 may determine a second resource for downlink transmission and/or reception in a SBFD time unit.

In some embodiments, the second resource is a PRB in a PRB bundle to which a VRB bundle available for downlink transmission and/or reception in the first resource indicated by the second information is interleavedly mapped and that is determined by the terminal, and a numerical count of second VRBs included in the VRB bundle available for downlink transmission and/or reception in the first resource indicated by the second information and a second frequency domain range of the VRB bundle available for downlink transmission and/or reception in the first resource indicated by the second information are determined by the terminal based on the first information, the numerical count of the first VRBs comprised in the each VRB bundle, and the first frequency domain range of the each VRB bundle, within each frequency domain range available for downlink transmission and/or reception in the BWP. The numerical count of the second VRBs is less than or equal to the numerical count of the first VRBs, and the second frequency domain range is the same as the first frequency domain range or is a subset of the first frequency domain range.

In some embodiments, the SBFD time unit may include both a UL subband and a DL subband in a frequency domain. In some examples, the SBFD time unit may further include a guard band (GB) in the frequency domain. In some examples, when there is at least one SBFD symbol among a plurality of symbols included in a slot, the slot may be referred to as a SBFD slot.

In some embodiments, a "time unit" may be a "slot" or a "symbol", which is not limited in the present disclosure.

In some embodiments, the frequency domain resource allocation method is type 1, and determining, by the terminal, the second resource for downlink transmission and/or reception in the SBFD time unit includes: determining, based on the first information, the numerical count of the first VRBs included in the each VRB bundle, and the first frequency domain range of the each VRB bundle, within each frequency domain range available for downlink transmission and/or reception in the BWP, a numerical count of second VRBs included in a VRB bundle available for downlink transmission and/or reception in the first resource indicated by the second information and a second frequency domain range of the VRB bundle available for downlink transmission and/or reception in the first resource indicated by the second information; determining a PRB bundle to which the VRB bundle available for downlink transmission and/or reception in the first resource indicated by the second information is interleavedly mapped, and determining a PRB in the PRB bundle as the second resource.

In some embodiments, the numerical count of the second VRBs is less than or equal to the numerical count of the first VRBs, and the second frequency domain range is the same as the first frequency domain range or is a subset of the first frequency domain range.

In other words, the terminal may determine, based on an overlap of the frequency domain range not available for DL transmission and/or reception indicated by the first information with the determined numerical count of VRBs included in each VRB bundle and the frequency domain range of each VRB bundle, within each frequency domain range available for downlink transmission and/or reception, the numerical count of VRBs included in the VRB bundle available for downlink transmission and/or reception and the frequency domain range of the VRB bundle available for downlink transmission and/or reception.

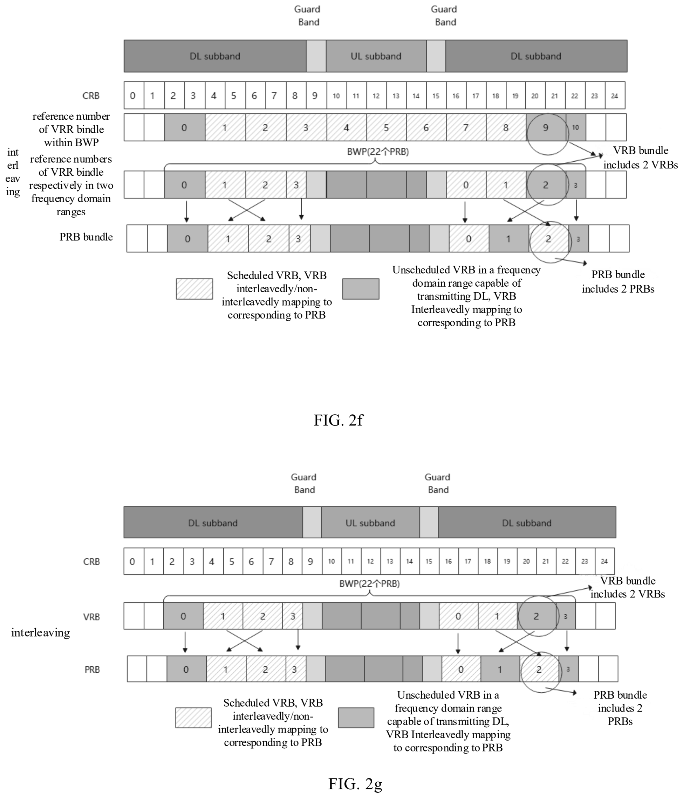

For example, as shown in FIG. 2f and FIG. 2g, the network device indicates continuous VRBs (i.e., a first resource) allocated to the UE, such as VRBs #4-19, through a RIV in a DCI. The frequency domain range unavailable for downlink transmission and/or reception indicated in the first information is VRBs #9-15. Then, an intersection VRBs #9-15 is not available for downlink transmission and/or reception, and the remaining VRBs #4-8 and VRBs #16-19 may be used for downlink transmission and/or reception.

As shown in FIG. 2f, the VRB bundles determined by the terminal within the frequency domain of the BWP are VRB bundles #0-10, and the numerical count of the first VRBs in the VRB bundle may be that: VRB bundles #0-9 each includes 2 VRBs, and VRB bundle #10 includes 1 VRB.

The VRB bundles within the third frequency domain (i.e., the frequency domain where the first downlink subband overlaps with the BWP) and the fourth frequency domain (i.e., the frequency domain where the second downlink subband overlaps with the BWP) may be numbered starting from 0, respectively. For example, reference numbers of VRB bundles #0-3 within the third frequency domain range remains #0-3, and reference numbers of VRB bundles within the fourth frequency domain range is updated from #7-10 to VRB bundles #0-3.

The first VRB bundle available for downlink transmission and/or reception in the first resource indicated by the second information, and a numerical count of second VRBs included in each VRB bundle in the first VRB bundle and the second frequency domain range are determined. Within the third frequency domain, the first VRB bundle includes VRB bundles #1-3, and the numerical count of second VRBs in the VRB bundles may be that: VRB bundles #1-2 each includes 2 VRBs (i.e., VRBs #2-7), and VRB bundle #3 includes 1 VRB (i.e., VRB#8). In the fourth frequency domain, the first VRB bundle includes VRB bundles #0-1, and the numerical count of second VRBs in the VRB bundles may be that: VRB bundles #0-1 each include 2 VRBs.

As shown in FIG. 2g, the terminal determines VRB bundles #0-3 as the VRB bundles in the third frequency domain range. The numerical count of first VRBs in the VRB bundles may be that: VRB bundles #0-2 each includes 2 VRBs, and VRB bundle #3 includes 1 VRB.

The terminal determines VRB bundles #0-3 as the VRB bundles in the fourth frequency domain range. The numerical count of first VRBs in the VRB bundles may be that: VRB bundles #0-2 each includes 2 VRBs, and VRB bundle #3 includes 1 VRB.

The first VRB bundle available for downlink transmission and/or reception in the first resource indicated by the second information, and a numerical count of second VRBs included in each VRB bundle in the first VRB bundle and the second frequency domain range are determined. Within the third frequency domain, the first VRB bundle includes VRB bundles #1-3, and the numerical count of second VRBs in the VRB bundles may be that: VRB bundles #0-2 each includes 2 VRBs, and VRB bundle #3 includes 1 VRB. In the fourth frequency domain, the first VRB bundle includes VRB bundles #0-1, and the numerical count of second VRBs in the VRB bundles may be that: VRB bundles #0-1 each includes 2 VRBs.

In some embodiments, determining the VRBs available for downlink transmission and/or reception in the first resource indicated by the second information may include determining VRB bundles within allocated DL frequency domains, respectively, to ensure that the VRBs in the VRB bundle may be used for DL transmission and/or reception.

In some embodiments, the terminal performs interleaving mapping in a plurality of DL frequency domain ranges based on the fifth information sent by the network device, that is, maps the VRB bundle to the PRB bundle to ensure that the mapped PRB bundle is within the DL frequency domain range. In some embodiments, the terminal may map the VRB bundle to the PRB bundle in the following manners.

1) A VRB bundle #$N_{Bundle,i}$-1 is mapped to a PRB bundle #$N_{Bundle,i}$-1, where an index range of the VRB bundles in the $i^{th}$ frequency domain range is 0 to $N_{Bundle,i}$-1, and VRB bundle $N_{Bundle,i}$-1 refers to the last VRB bundle in the $i^{th}$ frequency domain range.

2) Other VRB bundles #j $\in$ {0, 1, ..., $N_{Bundle,i}$-2} are mapped to PRB bundle #f(j) in a row-written, column-output manner, where the specific mapping is as follows:

$$f(j) = rC + c$$

$$j = cR + r$$

$$r = 0,1,\ldots,R-1$$

$$c = 0,1,\ldots,C-1$$

$$R = 2$$

$$C = \lfloor N_{\text{bundle,i}}/R \rfloor.$$

For example, as shown in FIG. 2f, the RIV in the DCI indicates consecutive VRBs (i. e., the first resource) allocated to the UE, such as VRBs #4-19. The frequency domain range unavailable for downlink transmission and/or reception indicated in the first information is VRBs #9-15. Then an intersection VRBs #9-15 is unavailable for downlink transmission and/or reception, and the remaining VRBs #4-8 and VRBs #16-19 may be used for downlink transmission and/or reception.

The terminal may determine the numerical count of first VRBs included in each VRB bundle within the frequency domain range of the BWP and the first frequency domain range of each VRB bundle according to the bandwidth information of the BWP, the starting position of the BWP, and the fourth information.

The VRB bundles determined by the terminal within the frequency domain range of the BWP are VRB bundles #0-10, and the numerical count of the first VRBs in the VRB bundles may be that: VRB bundles #0-9 each includes 2 VRBs, and VRB bundle #10 includes 1 VRB.

The VRB bundles within the third frequency domain (i.e., the frequency domain where the first downlink subband overlaps with the BWP) and the fourth frequency domain (i.e., the frequency domain where the second downlink subband overlaps with the BWP) may be numbered starting from 0, respectively. For example, reference numbers of VRB bundles #0-3 within the third frequency domain range remains #0-3, and reference numbers of VRB bundles within the fourth frequency domain range is updated from #7-10 to VRB bundles #0-3.

The first VRB bundle available for downlink transmission and/or reception in the first resource indicated by the second information, and a numerical count of second VRBs included in each VRB bundle in the first VRB bundle and the second frequency domain range are determined. In the third frequency domain, the first VRB bundle includes VRB bundles #1-3, and the numerical count of second VRBs in the VRB bundles may be that: VRB bundles #1-2 each includes 2 VRBs (i.e., VRBs #4-5 and VRBs #6-7), and VRB bundle #3 includes 1 VRB. In the fourth frequency domain, the first VRB bundle includes VRB bundles #0-1, and the numerical count of second VRBs in the VRB bundles may be that: VRB bundles #0-1 each includes 2 VRBs (i. e., VRBs #16-17 and VRBs #18-19).

When determining, based on the first information and the second information, that the terminal performs interleaving mapping, a mapping result of the third frequency domain range is as follows:

    VRB bundle #0 being mapped to PRB bundle #0;
    VRB bundle #1 being mapped to PRB bundle #2;
    VRB bundle #2 being mapped to PRB bundle #1;
    VRB bundle #3 being mapped to PRB bundle #3;
    and a mapping result of the fourth frequency domain range is as follows:

    VRB bundle #0 being mapped to PRB bundle #0;
    VRB bundle #1 being mapped to PRB bundle #2;
    VRB bundle #2 being mapped to PRB bundle #1;
    VRB bundle #3 being mapped to PRB bundle #3.

The second resource is determined based on the first VRB bundle and the mapping results. The second resource includes that: the third frequency domain includes PRB bundles #1-3, in which PRB bundles #1-2 each includes 2 PRBs (i. e., PRBs #4-5 and PRBs #6-7), and PRB bundle #3 includes 1 PRB (i. e., PRB #8), and the fourth frequency domain includes PRB bundles #0, 2, in which the PRB bundles #0, 2 each includes 2 PRBs (i. e., PRBs #16-17 and PRBs #20-21). Finally, the second resource includes PRBs #4-7, PRBs #16-17 and PRBs #20-21.

For example, as shown in FIG. 2g, the RIV in the DCI indicates consecutive VRBs (i. e., the first resource) allocated to the UE, such as VRBs #4-19. The frequency domain range unavailable for downlink transmission and/or reception indicated in the first information is VRBs #9-15. Then an intersection VRBs #9-15 is unavailable for downlink transmission and/or reception, and the remaining VRBs #4-8 and VRBs #16-19 may be available for downlink transmission and/or reception.

The terminal may determine the numerical count of first VRBs included in each VRB bundle in the third frequency domain range and the fourth frequency domain range and the first frequency domain range of each VRB bundle according to the bandwidth information of the BWP, the starting position of the BWP, the first information and the fourth information, and determine the numerical count of second VRBs included in each VRB bundle in the third frequency domain range and the fourth frequency domain range and the second frequency domain range of each VRB bundle. In this case, the numerical count of the first VRBs is equal to the numerical count of the second VRBs in each VRB bundle, and the first frequency domain range of each VRB bundle is equal to the second frequency domain range of each VRB bundle.

The terminal determines the VRB bundles as VRB bundles #0-3 in the third frequency domain range, and the numerical count of the first VRBs in the VRB bundles may be that: VRB bundles #0-2 each includes 2 VRBs, and VRB bundle #3 includes 1 VRB.

The terminal determines the VRB bundles as VRB bundles #0-3 in the fourth frequency domain range, and the numerical count of the first VRBs in the VRB bundles may be that: VRB bundles #0-2 each includes 2 VRBs, and VRB bundle #3 includes 1 VRB.

The first VRB bundle available for downlink transmission and/or reception in the first resource indicated by the second information, and a numerical count of second VRBs included in each VRB bundle in the first VRB bundle and the second frequency domain range are determined. In the third frequency domain, the first VRB bundle includes VRB bundles #1-3, and the numerical count of second VRBs in the VRB bundles may be that: VRB bundles #1-2 each includes 2 VRBs (i.e., VRBs #4-5 and VRBs #6-7), and VRB bundle #3 includes 1 VRB. In the fourth frequency domain, the first VRB bundle includes VRB bundles #0-1, and the numerical count of second VRBs in the VRB bundles may be that: VRB bundles #0-1 each includes 2 VRBs (i. e., VRBs #16-17 and VRBs #18-19).

When determining, based on the first information and the second information, that the terminal performs interleaving mapping, a mapping result of the third frequency domain range is as follows:

VRB bundle #0 being mapped to PRB bundle #0;
VRB bundle #1 being mapped to PRB bundle #2;
VRB bundle #2 being mapped to PRB bundle #1;
VRB bundle #3 being mapped to PRB bundle #3;
and a mapping result of the fourth frequency domain range is as follows:

VRB bundle #0 being mapped to PRB bundle #0;
VRB bundle #1 being mapped to PRB bundle #2;
VRB bundle #2 being mapped to PRB bundle #1;
VRB bundle #3 being mapped to PRB bundle #3.

The second resource is determined based on the first VRB bundle and the mapping results. The second resource includes that: the third frequency domain includes PRB bundles #1-3, in which PRB bundles #1-2 each includes 2 PRBs (i. e., PRBs #4-5 and PRBs #6-7), and PRB bundle #3 includes 1 PRB (i. e., PRB #8) , and the fourth frequency domain includes PRB bundles #0, 2, in which the PRB bundles #0, 2 each includes 2 PRBs (i. e., PRBs #16-17 and PRBs #20-21). Finally, the second resource includes PRBs #4-7, PRBs #16-17 and PRBs #20-21.

At step 2307, downlink data or a downlink channel is received by using the second resource.

For the optional implementation of step 2307, reference may be made to the optional implementation of step S2105 in FIG. 2a, the optional implementation of step 2204 in FIG. 2c and other related parts in the embodiment involved in FIG. 2a and FIG. 2c, and details may not be repeated here.

In some embodiments, the terminal uses the second resource to perform downlink reception, that is, to receive the downlink data or the downlink channel. Therefore, all VRB bundles may be mapped to the PRB bundles used for DL transmission and/or reception, and a resource utilization efficiency may be improved.

The communication method involved in the embodiment of the present disclosure may include at least one of steps 2301 to 2307. For example, step 2301 may be implemented as an independent embodiment, step 2303 may be implemented as an independent embodiment, steps 2301+2302+2304 may be implemented as an independent embodiment, and steps 2301+2302+2203 may be implemented as an independent embodiment, but are not limited thereto.

In some embodiments, steps 2301 and 2302 may be performed in an interchangeable order or simultaneously.

In some embodiments, step 2302, step 2303, 2304, 2305, 2306, and step 2307 are optional, and one or more of these steps may be omitted or replaced in different embodiments.

In some embodiments, step 2302 may be performed before step 2303, or step 2302 may be performed before or after step 2301 or simultaneously with step 2301, which is not limited in the disclosure.

In some embodiments, steps 2303, 2304, and 2305 may be performed before step 2306, or steps 2303, 2304, and 2305 may be performed after step 2302, which is not limited in the disclosure.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

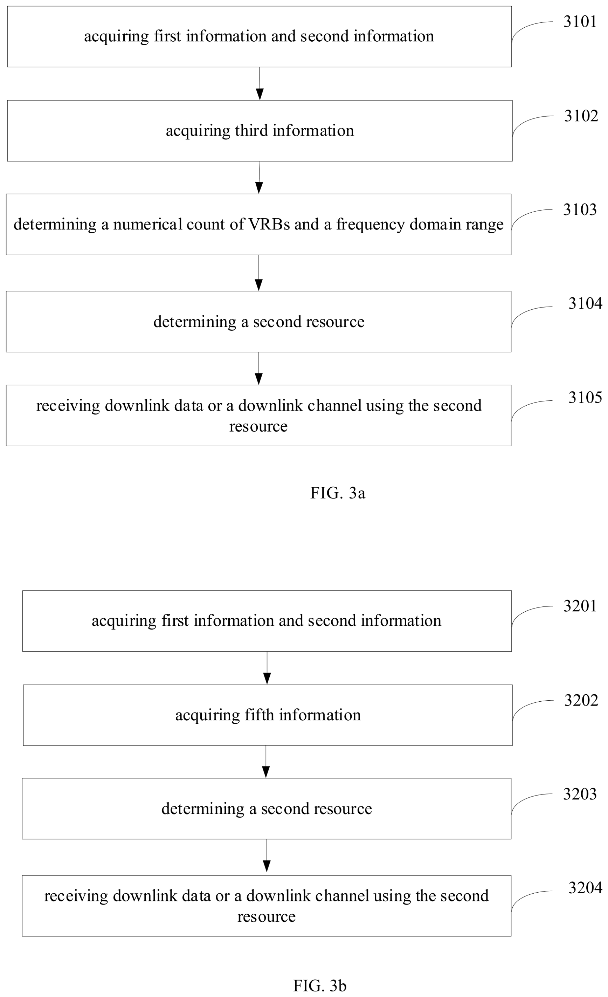

FIG. 3a is a flowchart of a resource determination method provided by an embodiment of the present disclosure. As shown in FIG. 3a, an embodiment of the present disclosure relates to a resource determination method. The method is performed by a terminal 101 and includes the following steps.

At step 3101, first information and second information are received.

For the optional implementation of step 3101, reference may be made to the step 2101 in FIG. 2a, and other related parts in the embodiment involved in FIG. 2a, and details may not be repeated here.

In some embodiments, the terminal 101 may receive the first information and the second information sent by a network device 102, which is not limited thereto, or may also receive the first information and the second information sent by other entities.

In some embodiments, the terminal 101 performs processing to obtain the first information and the second information.

In some embodiments, the terminal 101 obtains the first information and the second information specified by a protocol.

In some embodiments, the terminal 101 obtains the first information and the second information from an upper layer(s).

In some embodiments, the method for obtaining the first information may be the same as or different from the method for obtaining the second information.

In some embodiments, step S3101 may be omitted. The terminal 101 may autonomously implement the function indicated by the first information and the second information, or the above function may be null or default.

At step 3102, third information is obtained.

For the optional implementation of step 3102, reference may be made to step 2102 in FIG. 2a, and other related parts in the embodiment involved in FIG. 2a, and details may not be repeated here.

In some embodiments, the terminal may receive the third information sent by the network device 102, which is not limited thereto, or may also receive the third information sent by other entities.

In some embodiments, the terminal 101 performs processing to obtain the third information.

In some embodiments, the terminal 101 obtains the third information specified by a protocol.

In some embodiments, the terminal 101 obtains the third information from an upper layer(s).

In some embodiments, the method for obtaining the third information may be the same as or different from the method for obtaining the first information and the second information.

In some embodiments, step S3102 may be omitted. The terminal 101 may autonomously implement the function indicated by the third information, or the above function may be null or default.

At step 3103, a numerical count of VRBs and a frequency domain range are determined.

For the optional implementation of step 3103, reference may be made to step 2103 in FIG. 2a, and other related parts in the embodiment involved in FIG. 2a, and details may not be repeated here.

At step 3104, a second resource is determined.

For the optional implementation of step 3104, reference may be made to step 2104 in FIG. 2a, and other related parts in the embodiment involved in FIG. 2a, and details may not be repeated here.

At step 3105, downlink data or a downlink channel is received using the second resource.

For the optional implementation of steps 3103-3105, reference may be made to the optional implementation of steps 2103-2105 in FIG. 2a, and other related parts in the embodiment involved in FIG. 2a, and details may not be repeated here.

In some embodiments, steps 3101 and 3102 may be performed in an interchangeable order or simultaneously.

In some embodiments, step 3102, step 3103, step 3104, and step 3105 are optional, and one or more of these steps may be omitted or replaced in different embodiments.

In some embodiments, steps 3102 and 3103 may be performed before step 3104, or steps 3102 and 3103 may be performed before or after step 3101 or simultaneously with step 3101, which is not limited in the disclosure.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

FIG. 3b is a flowchart of a resource determination method provided by an embodiment of the present disclosure. As shown in FIG. 3b, an embodiment of the present disclosure relates to a resource determination method. The method is performed by a terminal 101 and includes the following steps.

At step 3201, first information and second information are received.

For the optional implementation of step 3201, reference may be made to step 2201 in FIG. 2c, and other related parts in the embodiment involved in FIG. 2c, and details may not be repeated here.

In some embodiments, the terminal 101 may receive the first information and the second information sent by a network device 102, which is not limited thereto, or may also receive the first information and the second information sent by other entities.

In some embodiments, the terminal 101 performs processing to obtain the first information and the second information.

In some embodiments, the terminal 101 obtains the first information and the second information specified by a protocol.

In some embodiments, the terminal 101 obtains the first information and the second information from an upper layer(s).

In some embodiments, the method for obtaining the first information may be the same as or different from the method for obtaining the second information.

In some embodiments, step S3201 may be omitted. The terminal 101 may autonomously implement the function indicated by the first information and the second information, or the above function may be null or default.

At step 3202, fifth information is obtained.

For the optional implementation of step 3202, reference may be made to step 2202 in FIG. 2c, and other related parts in the embodiment involved in FIG. 2c, and details may not be repeated here.

In some embodiments, the terminal may receive the fifth information sent by the network device 102, which is not limited thereto, or may also receive the fifth information sent by other entities.

In some embodiments, the terminal 101 performs processing to obtain the fifth information.

In some embodiments, the terminal 101 obtains the fifth information specified by a protocol.

In some embodiments, the terminal 101 obtains the fifth information from an upper layer(s).

In some embodiments, the method for obtaining the fifth information may be the same as or different.

In some embodiments, step S3202 may be omitted. The terminal 101 may autonomously implement the function indicated by the fifth information, or the above function may be null or default.

At step 3203, a second resource is determined.

In some embodiments, the above step 3203 is performed in a case where a frequency domain resource allocation mode is type 1.

In some embodiments, the frequency domain resource allocation method is type 1, and the terminal may determine the second resource for downlink transmission and/or reception in the SBFD time unit which includes: determining, based on the first information, within a frequency domain range of a BWP, a VRB for downlink transmission and/or reception in the first resource indicated by the second information; and determining a PRB to which the VRB for downlink transmission and/or reception in the first resource indicated by the second information is non-interleavedly mapped as the second resource.

In some embodiments, the frequency domain resource allocation method is type 1, and determining the second resource for downlink transmission and/or reception in the SBFD time unit includes: determining, based on the first information, within the frequency domain range of the BWP, the VRB for downlink transmission and/or reception in the first resource indicated by the second information; and determining the PRB to which the VRB for downlink transmission and/or reception in the first resource indicated by the second information is non-interleavedly mapped as the second resource.

For the optional implementation of step 3203, reference may be made to step 2203 in FIG. 2c, and other related parts in the embodiment involved in FIG. 2c, and details may not be repeated here.

At step 3204, downlink data or a downlink channel is received using the second resource.

For the optional implementation of step 3204, reference may be made to step 2204 in FIG. 2c, and other related parts in the embodiment involved in FIG. 2c, and details may not be repeated here.

For a detailed introduction of steps 3203-3204, reference may be made to the embodiment shown in FIG. 2c.

The resource determination method involved in the embodiment of the present disclosure may include at least one of steps 3201 to 3204. For example, step 3201 may be implemented as an independent embodiment, and step 3202 may be implemented as an independent embodiment, but are not limited thereto.

In some embodiments, steps 3201 and 3202 may be performed in an interchanged order or simultaneously.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

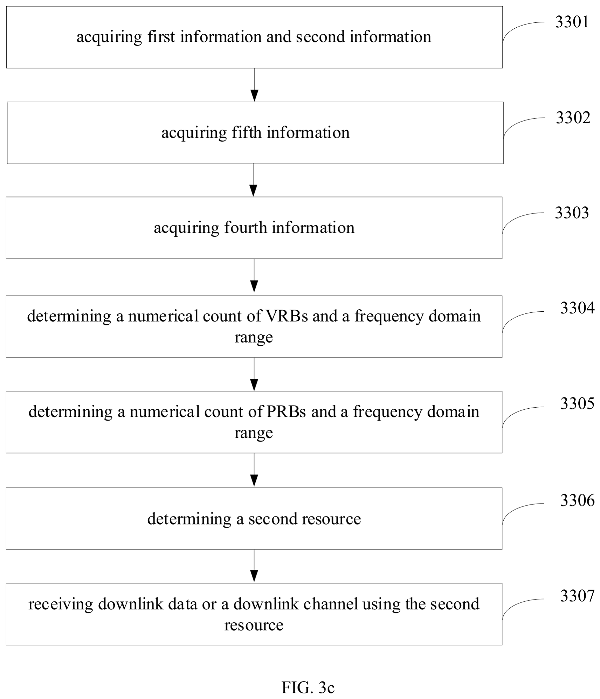

FIG. 3c is a flowchart of a resource determination method provided by an embodiment of the present disclosure. As shown in FIG. 3c, an embodiment of the present disclosure relates to a resource determination method. The method is performed by a terminal 101 and includes the following steps.

At step 3301, first information and second information are received.

For the optional implementation of step 3301, reference may be made to step 2301 in FIG. 2e, and other related parts in the embodiment involved in FIG. 2e, and details may not be repeated here.

In some embodiments, the terminal 101 may receive the first information and the second information sent by a network device 102, which is not limited thereto, or may also receive the first information and the second information sent by other entities.

In some embodiments, the terminal 101 performs processing to obtain the first information and the second information.

In some embodiments, the terminal 101 obtains the first information and the second information specified by a protocol.

In some embodiments, the terminal 101 obtains the first information and the second information from an upper layer(s).

In some embodiments, the method for obtaining the first information may be the same as or different from the method for obtaining the second information.

In some embodiments, step S3301 may be omitted. The terminal 101 may autonomously implement the function indicated by the first information and the second information, or the above function may be null or default.

At step 3302, fifth information is obtained.

For the optional implementation of step 3302, reference may be made to step 2302 in FIG. 2e, and other related parts in the embodiment involved in FIG. 2e, and details may not be repeated here.

In some embodiments, the terminal may receive the fifth information sent by the network device 102, which is not limited thereto, or may also receive fifth third information sent by other entities.

In some embodiments, the terminal 101 performs processing to obtain the fifth information.

In some embodiments, the terminal 101 obtains the fifth information specified by a protocol.

In some embodiments, the terminal 101 obtains the fifth information from an upper layer(s).

In some embodiments, the method for obtaining the fifth information may be the same as or different.

In some embodiments, step S3302 may be omitted. The terminal 101 may autonomously implement the function indicated by the fifth information, or the above function may be null or default.

At step 3303, fourth information is obtained.

For the optional implementation of step 3303, reference may be made to step 2303 in FIG. 2e, and other related parts in the embodiment involved in FIG. 2e, and details may not be repeated here.

In some embodiments, the terminal 101 may receive the fourth information sent by the network device.

In some embodiments, in a case where a frequency domain resource allocation method is type 1, and an interleaved mapping mode is used, the terminal 101 may receive the fourth information sent by the network device 102, but is not limited to this, or may also receive the fourth information sent by other entities.

In some embodiments, the terminal 101 performs processing to obtain the fourth information.

In some embodiments, the terminal 101 obtains the fourth information specified by a protocol.

In some embodiments, the terminal 101 obtains the fourth information from an upper layer(s).

In some embodiments, the method for obtaining the fourth information may be the same as or different.

In some embodiments, step S3303 may be omitted. The terminal 101 may autonomously implement the function indicated by the fourth information, or the above function may be null or default.

At step 3304, a numerical count of VRBs and a frequency domain range are determined.

For the optional implementation of step 3304, reference may be made to step 2304 in FIG. 2e, and other related parts in the embodiment involved in FIG. 2e, and details may not be repeated here.

At step 3305, a numerical count of PRBs and a frequency domain range are determined.

For the optional implementation of step 3305, reference may be made to step 2305 in FIG. 2e, and other related parts in the embodiment involved in FIG. 2e, and details may not be repeated here.

At step 3306, a second resource is determined.

For the optional implementation of step 3306, reference may be made to step 2306 in FIG. 2e, and other related parts in the embodiment involved in FIG. 2e, and details may not be repeated here.

In some embodiments, the above step 3306 is performed in a case where the frequency domain resource allocation mode is type 1.

In some embodiments, the frequency domain resource allocation method is type 1, and the terminal may determine the second resource for downlink transmission and/or reception in the SBFD time unit which includes: determining, based on the first information, the numerical count of the first VRBs included in the each VRB bundle, and the first frequency domain range of the each VRB bundle, within each frequency domain range available for downlink transmission and/or reception in the BWP, a numerical count of second VRBs included in a VRB bundle available for downlink transmission and/or reception in the first resource indicated by the second information and a second frequency domain range of the VRB bundle available for downlink transmission and/or reception in the first resource indicated by the second information; determining a PRB bundle to which the VRB bundle available for downlink transmission and/or reception in the first resource indicated by the second information is interleavedly mapped, and determining a PRB in the PRB bundle as the second resource.

In some embodiments, the frequency domain resource allocation method is type 1, and determining the second resource for downlink transmission and/or reception in the SBFD time unit includes: determining, based on the first information, the numerical count of the first VRBs included in the each VRB bundle, and the first frequency domain range of the each VRB bundle, within each frequency domain range available for downlink transmission and/or reception in the BWP, a numerical count of second VRBs included in a VRB bundle available for downlink transmission and/or reception in the first resource indicated by the second information and a second frequency domain range of the VRB bundle available for downlink transmission and/or reception in the first resource indicated by the second information; determining a PRB bundle to which the VRB bundle available for downlink transmission and/or reception in the first resource indicated by the second information is interleavedly mapped, and determining a PRB in the PRB bundle as the second resource.

At step 3307, downlink data or a downlink channel is received using the second resource.

For a detailed introduction of steps 3301-3307, reference may be made to the embodiment shown in FIG. 2e.

The resource determination method involved in the embodiment of the present disclosure may include at least one of steps 3301 to 3307. For example, step 3301 may be implemented as an independent embodiment, and step 3302 may be implemented as an independent embodiment, but are not limited thereto.

In some embodiments, steps 3201, 3202, and 3203 may be performed in an interchangeable order or simultaneously.

In some embodiments, steps 3302, 3303, 3304, and 3305 may be performed before step 3306, and steps 3302, 3303, 3304, and 3305 may be performed before or after step 3301 or simultaneously with step 3301, which is not limited by the present disclosure.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

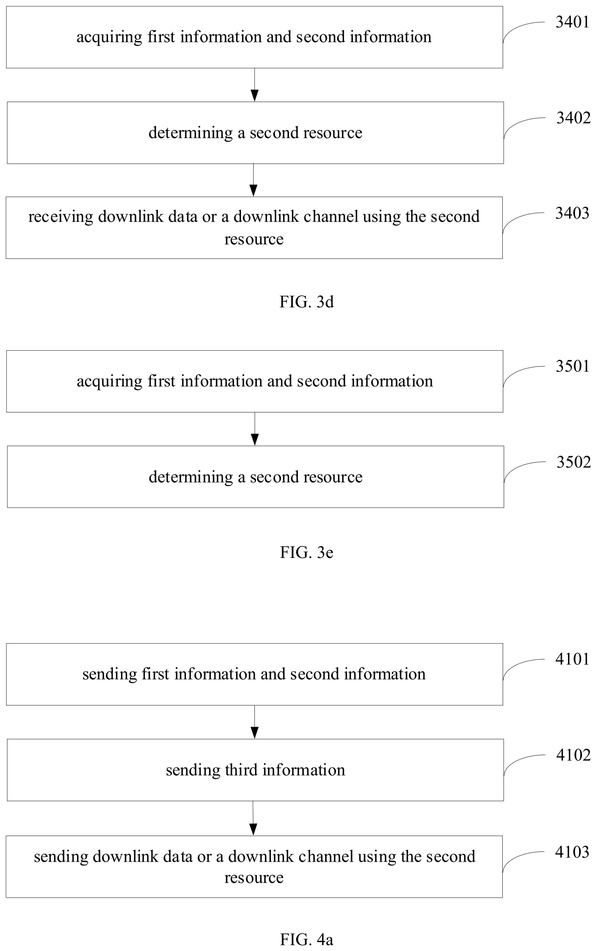

FIG. 3d is a flowchart of a resource determination method provided by an embodiment of the present disclosure. As shown in FIG. 3d, an embodiment of the present disclosure relates to a resource determination method. The method is performed by a terminal 101 and includes the following steps.

At step 3401, first information and second information are received.

In some embodiments, the terminal 101 may receive the first information and the second information sent by the network device.

For the optional implementation of step 3401, reference may be made to the optional implementations of step 2101 of FIG. 2a, step 2201 of FIG. 2c, step 2301 of FIG. 2e, step 3101 of FIG. 3a, step 3201 of FIG. 3b, step 3301 of FIG. 3c, and other related parts in the embodiments involved in FIG. 2a, FIG. 2c, and FIG. 2e, and details may not be repeated here.

At step 3402, a second resource is determined.

For the optional implementation of step 3402, reference may be made to steps 2102+2103+2104 of FIG. 2a, steps 2202+2203 of FIG. 2c, steps 2302+2303+2304+2305+2306 of FIG. 2e, steps 3102+3103+3104 of FIG. 3a, steps 3202+3203 of FIG. 3b, steps 3302+3303+3304+3305+3306 of FIG. 3c, and other related parts of the embodiments involved in FIG.s 2a, 2c and 2e, and details may not be repeated here.

At step 3403, downlink data or a downlink channel is received using the second resource.

For the optional implementation of step 3403, reference may be made to step 2105 of FIG. 2a, step 2204 of FIG. 2c, step 2307 of FIG. 2e, step 3105 of FIG. 3a, step 3204 of FIG. 3b, step 3307 of FIG. 3c, and other related parts in the embodiments involved in FIG. 2a,

FIG. 2c, and FIG. 2e, and details may not be repeated here.

The resource determination method involved in the embodiment of the present disclosure may include at least one of steps 3401 to 3403. For example, step 3401 may be implemented as an independent embodiment, and step 3402 may be implemented as an independent embodiment, but is not limited thereto.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

FIG. 3e is a flowchart of a resource determination method provided by an embodiment of the present disclosure. As shown in FIG. 3e, an embodiment of the present disclosure relates to a resource determination method. The method is performed by a terminal 101 and includes the following steps.

At step 3501, first information and second information are received.

In some embodiments, the first information is used to indicate a frequency domain range unavailable for downlink transmission and/or reception, and the second information is used to indicate a first resource allocated by a network device to the terminal.

For the optional implementation of step 3501, reference may be made to the optional implementations of step 2101 of FIG. 2a, step 2201 of FIG. 2c, step 2301 of FIG. 2e, step 3101 of FIG. 3a, step 3201 of FIG. 3b, step 3301 of FIG. 3c, and step 3401 of FIG. 3d, as well as other related parts in the embodiments involved in FIG. 2a, FIG. 2c, FIG. 2e, and FIGs.

3a-3d, and details may not be repeated here.

At step 3502, a second resource is determined.

For the optional implementation of step 3502, reference may be made to step 2102+2103+2104 of FIG. 2a, step 2202+2203 of FIG. 2c, step 2302+2303+2304+2305+2306 of FIG. 2e, step 3102+3103+3104 of FIG. 3a, step 3202+3203 of FIG. 3b, step 3302+3303+3304+3305+3306 of FIG. 3c, step 3402 of FIG. 3d, and other related parts of the embodiments involved in FIGs. 2a-2e and 3a-3d, and details may not be repeated here.

Optionally, in some embodiments, the first resource includes one or more RBGs, and the method further includes: receiving third information sent by the network device, in which the third information is used to configure the RBGs; and determining a numerical count of virtual resource blocks (VRBs) included in each RBG within a frequency domain range of a bandwidth part (BWP) and a frequency domain range of the each RBG according to bandwidth information of the BWP, a starting position of the BWP, and the third information.

Optionally, in some embodiments, determining the second resource for downlink transmission and/or reception in the SBFD time unit based on the first information and the second information includes: determining a VRB for downlink transmission and/or reception in the first resource indicated by the second information based on the first information and the numerical count of VRBs included in each RBG within the frequency domain range of the BWP and the frequency domain range of the each RBG; and determining a physical resource block (PRB) to which the VRB is non-interleavedly mapped as the second resource.

Optionally, in some embodiments, the first resource includes a plurality of consecutive VRBs, and determining the second resource for downlink transmission and/or reception in the SBFD time unit based on the first information and the second information includes: determining, based on the first information, within a frequency domain range of a BWP, a VRB for downlink transmission and/or reception in the first resource indicated by the second information; and determining a PRB to which the VRB for downlink transmission and/or reception in the first resource indicated by the second information is non-interleavedly mapped as the second resource.

Optionally, in some embodiments, the first resource includes a plurality of consecutive VRBs, and the method further includes: receiving fourth information sent by the network device, in which the fourth information is used for interleaving configuration; determining a numerical count of first VRBs included in each VRB bundle within a frequency domain range of a BWP and a first frequency domain range of the each VRB bundle according to bandwidth information of a BWP, a starting position of the BWP, and the fourth information; and determining a numerical count of PRBs included in each PRB bundle within the frequency domain range of the BWP and a frequency domain range of the each PRB bundle according to the bandwidth information of the BWP, the starting position of the BWP and the fourth information, in which a bundle configuration of the PRB bundle is the same as a bundle configuration of the VRB bundle.

Optionally, in some embodiments, determining the second resource for downlink transmission and/or reception in the SBFD time unit based on the first information and the second information includes: determining, based on the first information, the numerical count of the first VRBs included in the each VRB bundle, and the first frequency domain range of the each VRB bundle, within each frequency domain range available for downlink transmission and/or reception in the BWP, a numerical count of second VRBs included in a VRB bundle available for downlink transmission and/or reception in the first resource indicated by the second information and a second frequency domain range of the VRB bundle available for downlink transmission and/or reception in the first resource indicated by the second information, in which the numerical count of the second VRBs is less than or equal to the numerical count of the first VRBs, and the second frequency domain range is the same as the first frequency domain range or is a subset of the first frequency domain range; determining a PRB bundle to which the VRB bundle available for downlink transmission and/or reception in the first resource indicated by the second information is interleavedly mapped, and determining a PRB in the PRB bundle as the second resource.

Optionally, in some embodiments, the method further includes: receiving fifth information sent by the network device, in which the fifth information is used to instruct the terminal to adopt interleaved mapping or non-interleaved mapping.

Optionally, in some embodiments, the method further includes: receiving downlink data or a downlink channel using the second resource.

Optionally, in some embodiments, the frequency domain range unavailable for downlink transmission and/or reception includes: a frequency domain range for an uplink subband; or a frequency domain range for an uplink subband and a guard band.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

FIG. 4a is a flowchart of a resource determination method provided by an embodiment of the present disclosure. As shown in FIG. 4a, an embodiment of the present disclosure relates to a resource determination method. The method is performed by a network device 102 and includes the following steps.

At step 4101, first information and second information are sent.

For the optional implementation of step 4101, reference may be made to step 2101 in FIG. 2a, and other related parts in the embodiment involved in FIG. 2a, and details may not be repeated here.

In some embodiments, the network device 102 may send the first information and the second information to a terminal, but is not limited thereto, or may also send the first information and the second information to other entities.

In some embodiments, the first information may be used to indicate a frequency domain range unavailable for downlink transmission and/or reception, and the second information may be used to indicate a first resource allocated (or scheduled) by the network device for the terminal.

At step 4102, third information is sent.

In some embodiments, the third information is used to configure the RBGs, and the third information is used to assist the terminal in determining a numerical count of VRBs included in each RBG within a frequency domain range of a BWP and a frequency domain range of the each RBG, in which the numerical count of the VRBs and the frequency domain range are determined by the terminal according to the bandwidth information of the BWP, the starting position of the BWP, and the third information.

For the optional implementation of step 4102, reference may be made to the optional implementation of step 2102 in FIG. 2a, and other related parts in the embodiment involved in FIG. 2a, and details may not be repeated here.

In some embodiments, the first resource includes one or more RBGs, and the network device 102 may send the third information to the terminal, but is not limited thereto, or may also send the third information to other entities.

In some embodiments, the third information may be used to configure the RBG, and RBG configuration may include RBG configuration 1, RBG configuration 2, and other configuration types, which are not limited in the present disclosure. The third information may assist the terminal in determining a size of the RBG.

At step 4103, downlink data or a downlink channel is sent using the second resource.

For the optional implementation of step 4103, reference may be made to the optional implementation of step 2105 in FIG. 2a, and other related parts in the embodiment involved in FIG. 2a, and details may not be repeated here.

The resource determination method involved in the embodiment of the present disclosure may include at least one of steps 4101 to 4103. For example, step 4101 may be implemented as an independent embodiment, step 4102 may be implemented as an independent embodiment, for example, steps 4101+4102 may be implemented as independent embodiments.

In some embodiments, steps 4101 and 4102 may be performed in an interchangeable order or simultaneously.

In some embodiments, step 4101, step 4102, and step 4103 are optional, and one or more of these steps may be omitted or replaced in different embodiments.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

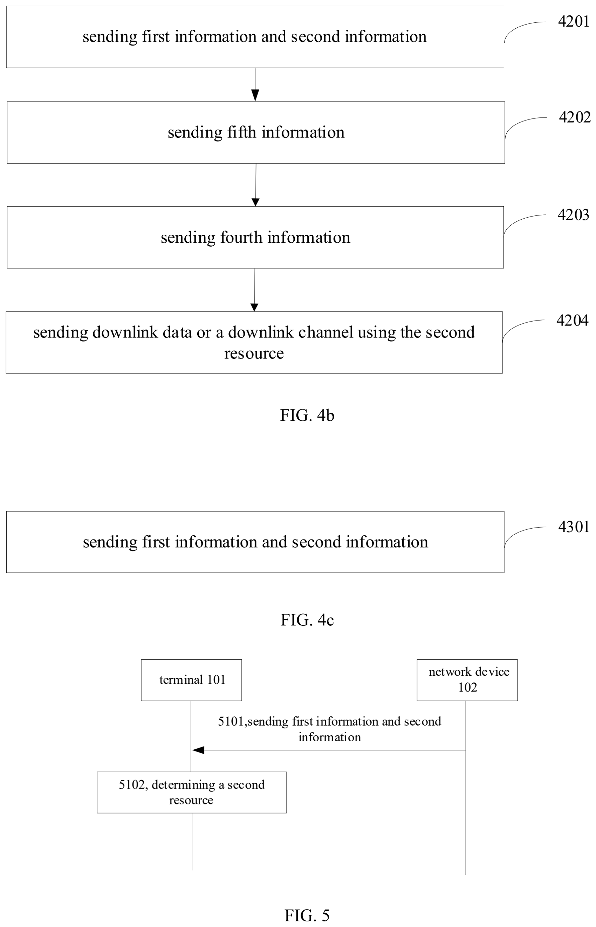

FIG. 4b is a flowchart of a resource determination method provided by an embodiment of the present disclosure. As shown in FIG. 4b, an embodiment of the present disclosure relates to a resource determination method. The method is performed by a network device 102 and includes the following steps.

At step 4201, first information and second information are sent.

For the optional implementation of step 4201, reference may be made to the optional implementations of step 2201 in FIG. 2c, step 2301 in FIG. 2e, and other related parts in the embodiment involved in FIG. 2c and FIG. 2e, and details may not be repeated here.

At step 4202, fifth information is sent.

In some embodiments, the first resource includes a plurality of continuous VRBs, and the network device 102 may send the fifth information to the terminal, but is not limited thereto, or may also send the fifth information to other entities.

In some embodiments, the fifth information is used to instruct the terminal to adopt interleaved mapping or non-interleaved mapping. In other words, the fifth information is used to indicate a resource mapping mode, which includes the interleaved mapping and the non-interleaved mapping. In other words, the fifth information is used to indicate a mode for mapping a VRB to a PRB, the VRB may be interleavedly mapped to the PRB, or the VRB may be non-interleavedly mapped to the PRB.

For the optional implementation of step 4202, reference may be made to the optional implementation of step 2202 in FIG. 2c, the optional implementation of step 2302 in FIG. 2e, and other related parts in the embodiment involved in FIG. 2c and FIG. 2e, and details may not be repeated here.

At step 4203, fourth information is sent.

In some embodiments, a frequency domain resource allocation mode is type 1, and an interleaved mapping mode is used, the terminal 101 may receive the fourth information sent by the network device 102.

In some embodiments, the fourth information is used for interleaving configuration. In other words, the fourth information may be used to indicate a rule for interleaving configuration.

In some embodiments, the fourth information is used to assist the terminal in determining a numerical count of first VRBs comprised in each VRB bundle within a frequency domain range of a BWP and a first frequency domain range of the each VRB bundle, the numerical count of first VRBs and the first frequency domain range are determined by the terminal based on bandwidth information of the BWP, a starting position of the BWP, and the fourth information. The fourth information is also used to assist the terminal in determining a numerical count of PRBs comprised in each PRB bundle within the frequency domain range of the BWP and a frequency domain range of the each PRB bundle, and the numerical count of PRBs and the frequency domain range are determined by the terminal based on the bandwidth information of the BWP, the starting position of the BWP and the fourth information. A bundle configuration of the PRB bundle is the same as a bundle configuration of the VRB bundle.

For the optional implementation of step 4203, reference may be made to the optional implementation of step 2303 in FIG. 2e, and other related parts in the embodiment involved in FIG. 2e, and details may not be repeated here.

At step 4204, downlink data or a downlink channel is sent using a second resource.

In some embodiments, the network device uses the second resource to send the downlink data or channel to the terminal, thus, the VRBs or the VRB bundles may all be mapped to the PRBs or the PRB bundles used for DL transmission and/or reception, and a resource utilization efficiency may be improved.

For the optional implementation of step 4204, reference may be made to the optional implementation of step 2204 in FIG. 2c, step 2307 in FIG. 2e, and other related parts in the embodiment involved in FIG. 2c and FIG. 2e, and details may not be repeated here.

The resource determination method involved in the embodiment of the present disclosure may include at least one of steps 4201 to 4204. For example, step 4201 may be implemented as an independent embodiment, and step 4202 may be implemented as an independent embodiment, but is not limited thereto.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

FIG. 4c is a flowchart of a resource determination method provided by an embodiment of the present disclosure. As shown in FIG. 4c, an embodiment of the present disclosure relates to a resource determination method. The method is performed by a network device 102 and includes the following steps.

At step 4301, first information and second information are sent.

The first information may be used to indicate a frequency domain range unavailable for downlink transmission and/or reception, and the second information may be used to indicate a first resource allocated (or scheduled) by the network device for the terminal.

The frequency domain range unavailable for downlink transmission and/or reception may include at least one of a frequency domain range for an uplink subband and a frequency domain range for a guard band.

For the optional implementation of step 4301, reference may be made to the optional implementation of step 2101 in FIG. 2a, step 2201 in FIG. 2c, step 2301 in FIG. 2e, step 4101 in FIG. 4a, step 4201 in FIG. 4b, and other related parts in the embodiments involved in FIGs. 2a, 2c, 2e, 4a, and 4b, and details may not be repeated here.

Optional, in some embodiments, the network device may send third information to the terminal. The third information may be used to configure the RBG. A RBG configuration may include RBG configuration 1, RBG configuration 2, and may also include other configuration types, which are not limited by the present disclosure. The RBG configuration may assist the terminal in determining a size of the RBG. The third information may also be used to assist the terminal in determining a numerical count of VRBs included in each RBG within a frequency domain range of a BWP and a frequency domain range of the each RBG, in which the numerical count of the VRBs and the frequency domain range are determined by the terminal according to the bandwidth information of the BWP, the starting position of the BWP, and the third information n.

Optionally, in some embodiments, the second resource is a PRB to which a VRB determined by the terminal is non-interleavedly mapped, the VRB is determined by the terminal based on the first information and the numerical count of VRBs included in each RBG within the frequency domain range of the BWP and the frequency domain range of the each RBG, and the VRB is a VRB for downlink transmission and/or reception in the first resource indicated by the second information.

Optionally, in some embodiments, the first resource includes a plurality of consecutive VRBs, the second resource is a PRB to which a VRB determined by the terminal is non-interleavedly mapped, the VRB is determined by the terminal within a frequency domain range of a BWP based on the first information, and the VRB is a VRB for downlink transmission and/or reception in the first resource indicated by the second information.

Optionally, in some embodiments, the first resource includes a plurality of consecutive VRBs, the second resource is a PRB to which a VRB determined by the terminal is non-interleavedly mapped, the VRB is determined by the terminal within a frequency domain range of a BWP based on the first information, and the VRB is a VRB for downlink transmission and/or reception in the first resource indicated by the second information.

Optionally, in some embodiments, the first resource includes a plurality of consecutive VRBs, and the method further includes: sending, by the network device, fourth information to the terminal, in which the fourth information is used for interleaving configuration, in other words, the fourth information may be used to indicate a rule for interleaving configuration. The fourth information is used to assist the terminal in determining a numerical count of first VRBs included in each VRB bundle within a frequency domain range of a BWP and a first frequency domain range of the each VRB bundle, the numerical count of first VRBs and the first frequency domain range are determined by the terminal based on bandwidth information of the BWP, a starting position of the BWP, and the fourth information; the fourth information is also used to assist the terminal in determining a numerical count of PRBs included in each PRB bundle within the frequency domain range of the BWP and a frequency domain range of the each PRB bundle, and the numerical count of PRBs and the frequency domain range are determined by the terminal based on the bandwidth information of the BWP, the starting position of the BWP and the fourth information, in which a bundle configuration of the PRB bundle is the same as a bundle configuration of the VRB bundle.

Optionally, in some embodiments, the second resource is a PRB in a PRB bundle to which a VRB bundle available for downlink transmission and/or reception in the first resource indicated by the second information is interleavedly mapped and that is determined by the terminal, and a numerical count of second VRBs included in the VRB bundle available for downlink transmission and/or reception in the first resource indicated by the second information and a second frequency domain range of the VRB bundle available for downlink transmission and/or reception in the first resource indicated by the second information are determined by the terminal based on the first information, the numerical count of the first VRBs included in the each VRB bundle, and the first frequency domain range of the each VRB bundle, within each frequency domain range available for downlink transmission and/or reception in the BWP, in which the numerical count of the second VRBs is less than or equal to the numerical count of the first VRBs, and the second frequency domain range is the same as the first frequency domain range or is a subset of the first frequency domain range.

Optionally, in some embodiments, the network device may send fifth information to the terminal. The fifth information is used to instruct the terminal to adopt interleaved mapping or non-interleaved mapping. In other words, the fifth information is used to indicate a resource mapping mode, which includes interleaved mapping and non-interleaved mapping. In other words, the fifth information is used to indicate a mode for mapping a VRB to a PRB, the VRB may be interleavedly mapped to the PRB, or the VRB may be non-interleavedly mapped to the PRB.

Optionally, in some embodiments, the method further includes that: the network device may send downlink data or a downlink channel using the second resource.

Optionally, in some embodiments, the frequency domain range unavailable for downlink transmission and/or reception includes: a frequency domain range for an uplink subband; or a frequency domain range for an uplink subband and a guard band.

In the implementation or embodiment, unless there is any contradiction, each step may be independent, arbitrarily combined or exchanged in order, the optional implementations or optional examples may be arbitrarily combined, and may be arbitrarily combined with any steps of other implementations or other embodiments.

FIG. 5 is a flowchart of a resource determination method provided by an embodiment of the present disclosure. As shown in FIG. 5, an embodiment of the present disclosure relates to a resource determination method. The method is configured in a communication system and includes the following steps.

At step 5101, a network device sends first information and second information to a terminal.

For the optional implementation of step 5101, reference may be made to the optional implementation of step 2101 of FIG. 2a, step 2201 of FIG. 2c, step 2301 of FIG. 2e, and other related parts in the embodiments involved in FIGs. 2a, 2c, and 2e. In some optional embodiments, step 5101 may include step 3101 of FIG. 3a and step 4101 of FIG. 4a, as well as the optional implementation of FIG.s 3a-3e, FIG.s 4a-4c, and other related parts in the embodiments involved in FIG.s 2a, 2c, and 2e, details may not be repeated here.

At step 5102, the terminal 101 determines a second resource.

For the optional implementation of step 5102, reference may be made to the optional implementation of step 2102 of FIG. 2a, step 2202 of FIG. 2c, step 2302 of FIG. 2e, and other related parts in the embodiments involved in FIG. 2a, FIG. 2c, and FIG. 2e. In some optional embodiments, step 5102 may include step 3102 of FIG. 3a and step 4102 of FIG. 4a, as well as the optional implementation of FIG. 3a-3e, FIG. 4a-4c, and other related parts in the embodiments involved in FIG. 2a, FIG. 2c, and FIG. 2e, details may not be repeated here.

In some embodiments, the above method may include the method described in the above embodiments of the communication system side, the terminal side, the network device side, etc., and details may not be repeated here.

The following is an introduction to examples of the above method.

In some optional embodiments of the present disclosure, a PDSCH resource mapping method of a terminal in an SBFD scenario includes at least one of the following.

In some embodiments, the terminal may perform the PDSCH resource mapping according to a method 1 in the SBFD scenario.

Method 1: a frequency domain resource allocation mode is type 0. The terminal receives a frequency domain range unavailable for DL transmission and/or reception in a SBFD symbol based on an RRC configuration or a DCI indication. The RRC configuration may include parameters such as rbg-Size. The terminal receives a DCI, and the DCI indicates a scheduled RBG, and the terminal determines, according to the DCI, a VRB unavailable for DL transmission and/or reception in each RBG in a BWP, and a PRB for receiving the DL transmission and/or reception.

For example, in the embodiment shown in FIG. 2b, the terminal determines the frequency domain range unavailable for downlink transmission and/or reception which includes a frequency domain range for a guard band and an uplink subband, determines that a VRB in a RBG overlapping with the frequency domain range available for DL transmission and/or reception is a VRB available for DL transmission and/or reception, and a PRB to which the VRB available for DL transmission and/or reception in the RBG allocated in the DCI is non-interleavedly mapped is a PRB for receiving the DL transmission and/or reception.

For example, RBGs scheduled by the terminal include RBG#1, RBG#2, RBG#3, RBG#4, RBG#5, RBG#6, RBG#7, and RBG#8. Then, four VRBs in RBG#1, RBG#2, and RBG#3 are all the VRBs available for DL transmission and/or reception, the first VRB in RBG#4 is the VRB available for DL transmission and/or reception, the last VRB in RBG#8 is the VRB available for DL transmission and/or reception, and the numerical count of the VRBs available for DL transmission and/or reception in RBG#5, RBG#6, and RBG#7 is 0.

In some optional embodiments, the terminal may perform the PDSCH resource mapping according to a method 2 in the SBFD scenario.

Method 2: a frequency domain resource allocation mode is type 1. The terminal receives a frequency domain range unavailable for DL transmission and/or reception in a SBFD symbol based on an RRC configuration or a DCI indication. The terminal receives a DCI, and the DCI indicates a scheduled VRB and the terminal determines, according to the received DCI, a VRB that may be used for DL transmission and/or reception in a BWP, and a PRB for receiving the DL transmission and/or reception.

For example, the terminal determines that a VRB overlapping with the frequency domain range available for DL transmission and/or reception is a VRB available for DL transmission and/or reception, and a PRB to which the VRB available for DL transmission and/or reception in the VRB allocated in the DCI is non-interleavedly mapped is a PRB for receiving the DL transmission and/or reception.

In some optional embodiments, the terminal may perform the PDSCH resource mapping according to a method 3 in the SBFD scenario.

Method 3: a frequency domain resource allocation mode is type 1. The terminal receives a frequency domain range unavailable for DL transmission and/or reception in a SBFD symbol based on an RRC configuration or a DCI indication. The RRC configuration may include interleaving parameters such as vrb-ToPRB-Interleaver. The terminal receives a DCI, and the DCI indicates a scheduled VRB and the terminal determines, according to the received DCI, a VRB available for DL transmission and/or reception in each VRB bundle in a BWP, and a PRB for receiving the DL transmission and/or reception.

For example, in the embodiment shown in FIG. 2g, the terminal determines VRB bundles in a frequency domain range 1 and a frequency domain range 2 available for DL transmission and/or reception, respectively. The terminal determines PRB bundles in the frequency domain range 1 and the frequency domain range 2 available for DL transmission and/or reception, respectively, and a method for determining the PRB bundles is the same as a method for determining the VRB bundles. A VRB being in VRBs indicated by the DCI and overlapping with the frequency domain range 1 and the frequency domain range 2 is an actually allocated VRB, and the terminal performs VRB bundle to PRB bundle mapping in the frequency domain range 1 and the frequency domain range 2 respectively, based on the actually allocated VRB.

For example, the terminal allocates VRB bundles 1, 2, 3 in the frequency domain range 1, and interleavedly maps, within the frequency domain range 1, the VRB bundles 1, 2, 3 to PRB bundles 1, 2, 3 on the frequency domain range 1, and allocates VRB bundles 0, 1 in the frequency domain range 2, and interleavedly maps, within the frequency domain range 2, the VRB bundles 0, 1 to PRB bundles 0, 2 on the frequency domain range 2.

The embodiments of the present disclosure also disclose an apparatus for implementing any of the above methods, for example, an apparatus is disclosed, the above apparatus includes units or modules for implementing various steps performed by the terminal in any of the above methods. For another example, an apparatus is disclosed, including units or modules for implementing various steps performed by a network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus may be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses may be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

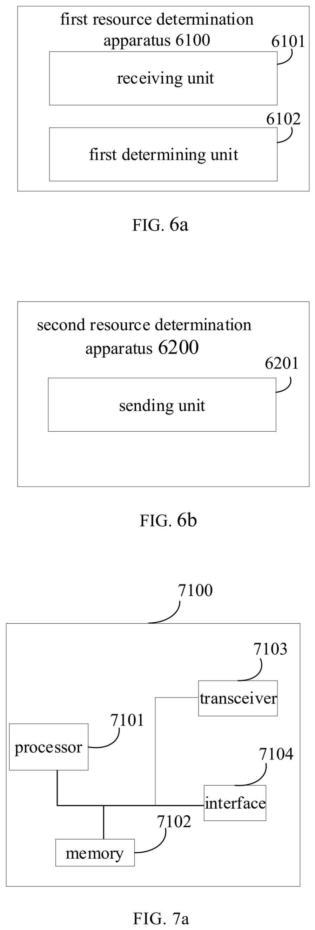

FIG. 6a is a schematic diagram of a structure of a first resource determination apparatus disclosed in an embodiment of the present disclosure. As shown in FIG. 6a, the first resource determination apparatus 6100 includes: a receiving unit 6101, configured to receive first information and second information sent by a network device, in which, the first information is used to indicate a frequency domain range unavailable for downlink transmission and/or reception, and the second information is used to indicate a first resource allocated by the network device to a terminal; a first determining unit 6102, configured to determine a second resource for downlink transmission and/or reception in a SBFD time unit based on the first information and the second information. Optionally, the above-mentioned receiving unit is configured to perform steps related to "receiving the first information and the second information" performed by the terminal 101 in any of the above methods, and the above-mentioned determining unit is configured to perform steps related to "determining the second resource" performed by the terminal 101 in any of the above methods, and details may not be repeated here. Optionally, the first resource determination apparatus further includes: at least one of a second determining unit and a third determining unit, the receiving unit is configured to perform steps related to "receiving third information" performed by the terminal 101 in any of the above methods, the second determining unit is configured to perform steps related to "determining a numerical count of VRBs included in each RBG within a frequency domain range of a BWP and a frequency domain range of the each RBG" performed by the terminal 101 in any of the above methods, the receiving unit is configured to perform steps related to "receiving fourth information" performed by the terminal 101 in any of the above methods, and the third determining unit is configured to perform steps related to "determining a numerical count of first VRBs included in each VRB bundle within a frequency domain range of a BWP and a first frequency domain range of the each VRB bundle" performed by the terminal 101 in any of the above methods. The above-mentioned third determining unit is configured to perform steps related to "determining a numerical count of PRBs comprised in each PRB bundle within the frequency domain range of the BWP and a frequency domain range of the each PRB bundle" performed by the terminal 101 in any of the above methods. The receiving unit is configured to perform steps related to "receiving fifth information" performed by the terminal 101 in any of the above methods. The receiving unit is configured to perform steps related to "receiving downlink data or a downlink channel using the second resource" performed by the terminal 101 in any of the above methods. Details are not repeated here.

FIG. 6b is a schematic diagram of a structure of a second resource determination apparatus disclosed in an embodiment of the present disclosure. As shown in FIG. 6b, the second resource determination apparatus 6200 includes: a sending unit 6201, configured to send first information and second information to a terminal, in which the first information is used to indicate a frequency domain range unavailable for downlink transmission and/or reception, the second information is used to indicate a first resource allocated by the network device to the terminal, and the first information and the second information are used to assist the terminal in determining a second resource for downlink transmission and/or reception in a SBFD time unit. Optionally, the sending unit is configured to perform steps related to "sending first information and second information" performed by the terminal 101 in any of the above methods, and details may not be repeated here. Optionally, the above sending unit is also configured to perform steps related to "sending third information" performed by the terminal 101 in any of the above methods, the above sending unit is also configured to perform steps related to "sending fourth information" performed by the terminal 101 in any of the above methods, the above sending unit is also configured to perform steps related to "sending fifth information" performed by the terminal 101 in any of the above methods. The above sending unit is configured to perform steps related to "sending downlink data or a downlink channel using the second resource" performed by the terminal 101 in any of the above methods. Details are not repeated here.

FIG. 7a is a schematic diagram of a communication device 7100 disclosed in an embodiment of the present disclosure. The communication device 7100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 7100 may be used to implement the method described in the above method embodiments, and for details, reference may be made to the description in the above method embodiments.

As shown in FIG. 7a, the communication device 7100 includes one or more processors 7101. The processor 7101 may be a general-purpose processor or a dedicated processor, for example, a baseband processor or a central processing unit. The baseband processor may be used to process a communication protocol and communication data, and the central processing unit may be used to control the communication device (such as a base station, a baseband chip, a terminal, a terminal chip, a DU or a CU, etc.) to execute a program and process data of the program. The processor 7101 is used to call instructions so that the communication device 7100 executes any of the above methods.

In some embodiments, the communication device 7100 further includes one or more memories 7102 for storing instructions. Optionally, all or part of the memory 7102 may be outside the communication device 7100.

In some embodiments, the communication device 7100 further includes one or more transceivers 7103. When the communication device 7100 includes one or more transceivers 7103, the communication steps such as sending and receiving in the above methods are performed by the transceiver 7103, and the other steps are performed by the processor 7101.

In some embodiments, the transceiver may include a receiver and a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

Optionally, the communication device 7100 further includes one or more interface circuits 7104, which are connected to the memory 7102. The interface circuit 7104 may be used to receive signals from the memory 7102 or other apparatuses, and may be used to send signals to the memory 7102 or other apparatuses. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7a. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (7) others, etc.

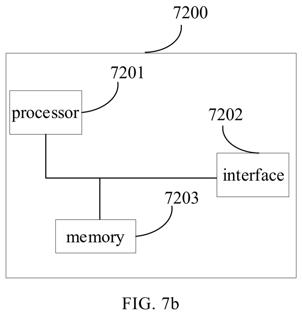

FIG. 7b is a schematic diagram of a chip 7200 disclosed in an embodiment of the present disclosure. In case where the communication device 7100 may be a chip or a chip system, reference may be made to the schematic diagram of the chip 7200 shown in FIG. 7b, but the present disclosure is not limited thereto.

The chip 7200 includes one or more processors 7201, and the processor 7201 is used to call instructions so that the chip 7200 executes any of the above methods.

In some embodiments, the chip 7200 further includes one or more interface circuits 7202, which are connected to the memory 7203. The interface circuit 7202 may be used to receive signals from the memory 7203 or other apparatuses, and the interface circuit 7202 may be used to send signals to the memory 7203 or other apparatuses. For example, the interface circuit 7202 may read instructions stored in the memory 7203 and send the instructions to the processor 7201. Optionally, the terms such as "interface circuit", "interface", "transceiver pin", and "transceiver" may be exchangeable with each other.

In some embodiments, the chip 7200 further includes one or more memories 7203 for storing instructions. Optionally, all or part of the memory 7203 may be outside the chip 7200.

The present disclosure also discloses a storage medium, on which instructions are stored, and when the instructions are executed on the communication device 7100, the communication device 7100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also discloses a program product, which, when executed by the communication device 7100, enables the communication device 7100 to execute any of the above methods. Optionally, the program product is a computer program product.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general-purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media may be a magnetic medium (such as a floppy disk, a hard disk and a magnetic tape), an optical medium (such as a digital video disk (DVD)), or a semiconductor medium (such as a solid state disk (SSD)).

Those skilled in the related art may realize that, units and algorithm steps of the examples described in combination with embodiments of the present disclosure may be implemented by electronic hardware or a combination of the electronic hardware and computer software. Whether the functions are executed by the hardware or the software depends on a specific application and a design constraint of the technical solution. Those skilled in the art may adopt different methods for each specific application to implement the described functions, but such implementation should not be considered as going beyond the scope of the present disclosure.

The present disclosure also discloses a computer program which, when executed on a computer, causes the computer to execute any one of the above methods.

**Claims**

1. A resource determination method, performed by a terminal, comprising:

   receiving first information and second information sent by a network device, wherein the first information is used to indicate a frequency domain range unavailable for downlink transmission and/or reception, and the second information is used to indicate a first resource allocated by the network device to the terminal; and
   determining a second resource for downlink transmission and/or reception in a subband full duplex (SBFD) time unit based on the first information and the second information.

2. The method according to claim 1, wherein the first resource comprises one or more resource block groups (RBGs), and the method further comprises:

   receiving third information sent by the network device, wherein the third information is used to configure the RBGs; and
   determining a numerical count of virtual resource blocks (VRBs) comprised in each RBG within a frequency domain range of a bandwidth part (BWP) and a frequency domain range of the each RBG according to bandwidth information of the BWP, a starting position of the BWP, and the third information.

3. The method according to claim 2, wherein determining the second resource for downlink transmission and/or reception in the SBFD time unit based on the first information and the second information comprises:

   determining a VRB for downlink transmission and/or reception in the first resource indicated by the second information based on the first information and the numerical count of VRBs comprised in each RBG within the frequency domain range of the BWP and the frequency domain range of the each RBG; and
   determining a physical resource block (PRB) to which the VRB is non-interleavedly mapped as the second resource.

4. The method according to claim 1, wherein the first resource comprises a plurality of consecutive VRBs, and determining the second resource for downlink transmission and/or reception in the SBFD time unit based on the first information and the second information comprises:

   determining, based on the first information, within a frequency domain range of a BWP, a VRB for downlink transmission and/or reception in the first resource indicated by the second information; and

determining a PRB to which the VRB for downlink transmission and/or reception in the first resource indicated by the second information is non-interleavedly mapped as the second resource.

5. The method according to claim 1, wherein the first resource comprises a plurality of consecutive VRBs, and the method further comprises:

receiving fourth information sent by the network device, wherein the fourth information is used for interleaving configuration;

determining a numerical count of first VRBs comprised in each VRB bundle within a frequency domain range of a BWP and a first frequency domain range of the each VRB bundle according to bandwidth information of a BWP, a starting position of the BWP, and the fourth information; and

determining a numerical count of PRBs comprised in each PRB bundle within the frequency domain range of the BWP and a frequency domain range of the each PRB bundle according to the bandwidth information of the BWP, the starting position of the BWP and the fourth information, wherein a bundle configuration of the PRB bundle is the same as a bundle configuration of the VRB bundle.

6. The method according to claim 5, wherein determining the second resource for downlink transmission and/or reception in the SBFD time unit based on the first information and the second information comprises:

determining, based on the first information, the numerical count of the first VRBs comprised in the each VRB bundle, and the first frequency domain range of the each VRB bundle, within each frequency domain range available for downlink transmission and/or reception in the BWP, a numerical count of second VRBs comprised in a VRB bundle available for downlink transmission and/or reception in the first resource indicated by the second information and a second frequency domain range of the VRB bundle available for downlink transmission and/or reception in the first resource indicated by the second information, wherein the numerical count of the second VRBs is less than or equal to the numerical count of the first VRBs, and the second frequency domain range is the same as the first frequency domain range or is a subset of the first frequency domain range;

determining a PRB bundle to which the VRB bundle available for downlink transmission and/or reception in the first resource indicated by the second information is interleavedly mapped, and determining a PRB in the PRB bundle as the second resource.

7. The method according to any one of claims 4 to 6, further comprising:

receiving fifth information sent by the network device,

wherein the fifth information is used to instruct the terminal to adopt interleaved mapping or non-interleaved mapping.

8. The method according to any one of claims 1 to 7, further comprising:
receiving downlink data or a downlink channel using the second resource.

9. The method according to any one of claims 1 to 8, wherein the frequency domain range unavailable for downlink transmission and/or reception comprises:

a frequency domain range for an uplink subband; or
a frequency domain range for an uplink subband and a guard band.

10. A resource determination method, performed by a network device, comprising:

sending first information and second information to a terminal;

wherein the first information is used to indicate a frequency domain range unavailable for downlink transmission and/or reception, the second information is used to indicate a first resource allocated by the network device to the terminal, and the first information and the second information are used to assist the terminal in determining a second resource for downlink transmission and/or reception in a subband full duplex (SBFD) time unit.

11. The method according to claim 10, wherein the first resource comprises one or more resource block groups (RBGs), and the method further comprises:
sending third information to the terminal, wherein the third information is used to configure the RBGs, and the third information is used to assist the terminal in determining a numerical count of virtual resource blocks (VRBs) comprised in each RBG within a frequency domain range of a bandwidth part (BWP) and a frequency domain range of the each RBG, wherein the numerical count of the VRBs and the frequency domain range are determined by the terminal according to the bandwidth information of the BWP, a starting position of the BWP, and the third information.

12. The method according to claim 11, wherein the second resource is a physical resource block (PRB) to which a virtual resource block (VRB) determined by the terminal is non-interleavedly mapped, the VRB is determined by the terminal based on the first information and the numerical count of VRBs comprised in each RBG within the frequency domain range of the BWP and the frequency domain range of the each RBG, and the VRB is a VRB for downlink transmission and/or reception in the first resource indicated by the second information.

13. The method according to claim 10, wherein the first resource comprises a plurality of consecutive VRBs, the second resource is a PRB to which a VRB determined by the terminal is non-interleavedly mapped, the VRB is determined by the terminal within a frequency domain range of a BWP based on the first information, and the VRB is a VRB for downlink transmission and/or reception in the first resource indicated by the second information.

14. The method according to claim 10, wherein the first resource comprises a plurality of consecutive VRBs, and the method further comprises:

sending fourth information to the terminal, wherein the fourth information is used for interleaving configuration, and the fourth information is used to assist the terminal in determining a numerical count of first VRBs comprised in each VRB bundle within a frequency domain range of a BWP and a first frequency domain range of the each VRB bundle, the numerical count of first VRBs and the first frequency domain range are determined by the terminal based on bandwidth information of the BWP, a starting position of the BWP, and the fourth information;
the fourth information is used to assist the terminal in determining a numerical count of PRBs comprised in each PRB bundle within the frequency domain range of the BWP and a frequency domain range of the each PRB bundle, and the numerical count of PRBs and the frequency domain range are determined by the terminal based on the bandwidth information of the BWP, the starting position of the BWP and the fourth information, wherein a bundle configuration of the PRB bundle is the same as a bundle configuration of the VRB bundle.

15. The method according to claim 14, wherein the second resource is a PRB in a PRB bundle to which a VRB bundle available for downlink transmission and/or reception in the first resource indicated by the second information is interleavedly mapped and that is determined by the terminal, and a numerical count of second VRBs comprised in the VRB bundle available for downlink transmission and/or reception in the first resource indicated by the second information and a second frequency domain range of the VRB bundle available for downlink transmission and/or reception in the first resource indicated by the second information are determined by the terminal based on the first information, the numerical count of the first VRBs comprised in the each VRB bundle, and the first frequency domain range of the each VRB bundle, within each frequency domain range available for downlink transmission and/or reception in the BWP, wherein the numerical count of the second VRBs is less than or equal to the numerical count of the first VRBs, and the second frequency domain range is the same as the first frequency domain range or is a subset of the first frequency domain range.

16. The method according to any one of claims 14 to 15, further comprising:

sending fifth information to the terminal;
wherein the fifth information is used to instruct the terminal to adopt interleaved mapping or non-interleaved mapping.

17. The method according to any one of claims 10 to 16, further comprising:
sending downlink data or a downlink channel using the second resource.

18. The method according to any one of claims 10 to 17, wherein the frequency domain range unavailable for downlink transmission and/or reception comprises:

a frequency domain range for an uplink subband; or
a frequency domain range for an uplink subband and a guard band.

19. A resource determination method, configured in a communication system, comprising:

sending, by a network device, first information and second information to a terminal; and

determining, by the terminal, a second resource for downlink transmission and/or reception in a subband full duplex (SBFD) time unit based on the first information and the second information;

wherein the first information is used to indicate a frequency domain range unavailable for downlink transmission and/or reception, and the second information is used to indicate a first resource allocated by the network device to the terminal.

20. A first resource determination apparatus, comprising:

a receiving unit, configured to receive first information and second information sent by a network device, wherein the first information is used to indicate a frequency domain range unavailable for downlink transmission and/or reception, and the second information is used to indicate a first resource allocated by the network device to a terminal; and

a determining unit is configured to determine a second resource for downlink transmission and/or reception in a subband full duplex (SBFD) time unit based on the first information and the second information.

21. A second resource determination apparatus, comprising:

a sending unit, configured to send first information and second information to a terminal,

wherein the first information is used to indicate a frequency domain range unavailable for downlink transmission and/or reception, the second information is used to indicate a first resource allocated by the network device to the terminal, and the first information and the second information are used to assist the terminal in determining a second resource for downlink transmission and/or reception in a subband full duplex (SBFD) time unit.

22. A communication device, comprising:

one or more processors;

wherein the processor is configured to call instructions to enable the communication device to perform the resource determination method according to any one of claims 1 to 9 or any one of claims 10 to 18.

23. A communication system, comprises a terminal and a network device, wherein the terminal is configured to implement the resource determination method according to any one of claims 1 to 9, and the network device is configured to implement the resource determination method according to any one of claims 10 to 18.

24. A storage medium storing instructions that, when executed on a communication device, cause the communication device to perform the resource determination method according to any one of claims 1 to 9 or any one of claims 10 to 18.

Communication system 100

| Terminal 101 | —— | Network device 102 |

FIG. 1

| terminal 101 | | network device 102 |

2101, sending first information and second information

2102, sending third information

2103, determining a numerical count of VRBs and a frequency domain range

2104, determining a second resource

2105, receiving downlink data or a downlink channel using the second resource

FIG. 2a

FIG. 2b

FIG. 2c

FIG. 2d

terminal 101

network device 102

2301, sending first information and second information

2302, sending fifth information

2303, sending fourth information

2304, determining a numerical count of VRBs and a frequency domain range

2305, determining a numerical count of PRBs and a frequency domain range

2306, determining a second resource

2307, receiving downlink data or a downlink channel using the second resource

FIG. 2e

FIG. 2f

FIG. 2g

acquiring first information and second information — 3101

acquiring third information — 3102

determining a numerical count of VRBs and a frequency domain range — 3103

determining a second resource — 3104

receiving downlink data or a downlink channel using the second resource — 3105

FIG. 3a

acquiring first information and second information — 3201

acquiring fifth information — 3202

determining a second resource — 3203

receiving downlink data or a downlink channel using the second resource — 3204

FIG. 3b

acquiring first information and second information — 3301

acquiring fifth information — 3302

acquiring fourth information — 3303

determining a numerical count of VRBs and a frequency domain range — 3304

determining a numerical count of PRBs and a frequency domain range — 3305

determining a second resource — 3306

receiving downlink data or a downlink channel using the second resource — 3307

FIG. 3c

acquiring first information and second information — 3401

determining a second resource — 3402

receiving downlink data or a downlink channel using the second resource — 3403

FIG. 3d

acquiring first information and second information — 3501

determining a second resource — 3502

FIG. 3e

sending first information and second information — 4101

sending third information — 4102

sending downlink data or a downlink channel using the second resource — 4103

FIG. 4a

```
┌─────────────────────────────────────────────────────┐
│                                                       │  ⌐─ 4201
│     sending first information and second information  │
│                                                       │
└─────────────────────────────────────────────────────┘
                          │
                          ▼
┌─────────────────────────────────────────────────────┐
│                                                       │  ⌐─ 4202
│              sending fifth information                │
│                                                       │
└─────────────────────────────────────────────────────┘
                          │
                          ▼
┌─────────────────────────────────────────────────────┐
│                                                       │  ⌐─ 4203
│              sending fourth information               │
│                                                       │
└─────────────────────────────────────────────────────┘
                          │
                          ▼
┌─────────────────────────────────────────────────────┐
│  sending downlink data or a downlink channel using   │  ⌐─ 4204
│              the second resource                      │
└─────────────────────────────────────────────────────┘
```

FIG. 4b

```
┌─────────────────────────────────────────────────────┐
│                                                       │  ⌐─ 4301
│     sending first information and second information  │
│                                                       │
└─────────────────────────────────────────────────────┘
```

FIG. 4c

```
┌──────────────────┐                    ┌──────────────────┐
│  terminal 101    │                    │  network device  │
│                  │                    │       102        │
└──────────────────┘                    └──────────────────┘
         │        5101,sending first information and second │
         │                     information                  │
         │◄─────────────────────────────────────────────────│
  ┌──────────────────┐                           │
  │ 5102, determining│                           │
  │  a second        │                           │
  │  resource        │                           │
  └──────────────────┘                           │
         │                                        │
```

FIG. 5

first resource determination apparatus 6100 — 6101

receiving unit

6102

first determining unit

FIG. 6a

second resource determination apparatus 6200 — 6201

sending unit

FIG. 6b

7100

7103

transceiver

7101

processor

7104

interface

7102

memory

FIG. 7a

7200

7201

processor

7202

interface

7203

memory

FIG. 7b

## INTERNATIONAL SEARCH REPORT

| International application No. |
|---|
| **PCT/CN2023/091395** |

**A. CLASSIFICATION OF SUBJECT MATTER**

H04W 72/23(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT; CNKI; VEN; USTXT; EPTXT; WOTXT; 3GPP: 子带全双工, 频域, 配置, 下行, 上行, 子带, 资源, 不可用, 虚拟资源块, 交织, SBFD, frequency, configure, downlink, uplink, subband, PRB, unavailable, VRB, PDSCH, RBG, FDRA, interleave

**C. DOCUMENTS CONSIDERED TO BE RELEVANT**

| Category* | Citation of document, with indication, where appropriate, of the relevant passages | Relevant to claim No. |
|---|---|---|
| X | MEDIATEK INC. "Discussion on subband non-overlapping full duplex for NR" *3GPP TSG RAN WG1 Meeting #112bis-e, R1- 2302736*, 07 April 2023 (2023-04-07), sections 2.1.1 and 2.4.2 | 1-24 |
| X | XIAOMI. "Discussion on subband non-overlapping full duplex" *3GPP TSG RAN WG1 #112bis-e, R1-2302982*, 07 April 2023 (2023-04-07), sections 2.2 and 2.5 | 1-24 |
| X | NOKIA et al. "On subband non-overlapping full duplex for NR" *3GPP TSG RAN WG1 #112bis-e, R1-2303016*, 07 April 2023 (2023-04-07), sections 2.3.1 and 2.3.3 | 1-24 |
| A | CN 115868232 A (BEIJING XIAOMI MOBILE SOFTWARE CO., LTD.) 28 March 2023 (2023-03-28) entire document | 1-24 |

☐ Further documents are listed in the continuation of Box C. ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 January 2024** | **06 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2023/091395** |

| Patent document<br>cited in search report | Publication date<br>(day/month/year) | Patent family member(s) | Publication date<br>(day/month/year) |
|---|---|---|---|
| CN 115868232 A | 28 March 2023 | None | |